# EUROPÄISCHE PATENTSCHRIFT

(11) **EP 4 234 189 B1**
(45) Veröffentlichungstag und Bekanntmachung des Hinweises auf die Patenterteilung: **09.07.2025**
(21) Anmeldenummer: 23158585.2
(22) Anmeldetag: 24.02.2023
(51) Int. Cl.: B26F 1/44, B29C 51/26, B29C 51/32

(54) **NIEDERHALTERVORRICHTUNG FÜR EINE UMFORMVORRICHTUNG, VERFAHREN ZU EINER UMFORMUNG VON VERPACKUNGSMATERIAL MITTELS DER UMFORMVORRICHTUNG SOWIE PRODUKTIONSMASCHINE MIT EINER DERARTIGEN UMFORMVORRICHTUNG**
HOLDING-DOWN DEVICE FOR A FORMING DEVICE, METHOD FOR FORMING PACKAGING MATERIAL BY MEANS OF THE FORMING DEVICE, AND PRODUCTION MACHINE COMPRISING SUCH A FORMING DEVICE
DISPOSITIF DE MAINTIEN POUR UN DISPOSITIF DE FORMAGE, PROCÉDÉ DE FORMAGE D'UN MATÉRIAU D'EMBALLAGE AU MOYEN DU DISPOSITIF DE FORMAGE AINSI QUE MACHINE DE PRODUCTION DOTÉE D'UN TEL DISPOSITIF DE FORMAGE

(30) Priorität: 25.02.2022 DE 102022104583
(43) Veröffentlichungstag der Anmeldung: 30.08.2023
(73) Patentinhaber: Syntegon Technology GmbH, 71332 Waiblingen (DE)
(72) Erfinder: Klauser, Matthias, 70499 Stuttgart (DE); Stotz, Heike, 72766 Reutlingen (DE); Bischoff, Bernd Konrad, 71332 Waiblingen (DE); Selinger, Gebhard, 73547 Lorch (DE)
(74) Vertreter: Novagraaf Group

(56) Entgegenhaltungen:
- DE-A1- 102007 050 637
- DE-A1- 3 037 050
- DE-A1- 4 304 951
- JP-A- S58 217 318
- US-A- 4 104 349

## Beschreibung

### Stand der Technik

Die Erfindung betrifft eine Niederhaltervorrichtung für eine Umformvorrichtung, die zu einer Herstellung von dreidimensionalen Formkörpern aus Verpackungsmaterial vorgesehen ist. Die Niederhaltervorrichtung umfasst zumindest ein Niederhalterelement und zumindest ein weiteres Niederhalterelement, die relativ zueinander beweglich gelagert sind und zu einem Halten des Verpackungsmaterials während eines Umformvorgangs vorgesehen sind. Zudem umfasst die Niederhaltervorrichtung zumindest eine Schneidvorrichtung, die dazu vorgesehen ist, das Verpackungsmaterial zumindest stellenweise zu durchtrennen und/oder zumindest stellenweise einzuschneiden.

Aus WO 2015/169280 A1 ist bereits eine Niederhaltervorrichtung für eine Umformvorrichtung bekannt, wobei die Niederhaltervorrichtung ein Niederhalterelement und ein weiteres Niederhalterelement, die relativ zueinander beweglich gelagert sind und zu einem Halten des Verpackungsmaterials während eines Umformvorgangs vorgesehen sind, sowie eine Schneidvorrichtung umfasst, die dazu vorgesehen ist, das Verpackungsmaterial zumindest stellenweise zu durchtrennen. Ein stellenweises Einschneiden des Verpackungsmaterials durch die Schneidvorrichtung erfolgt nach einem Fixieren des Verpackungsmaterials mittels der Niederhaltervorrichtung. Somit sind zwei Prozessschritte durchzuführen, bevor in einem weiteren Prozessschritt ein Umformen eines erhaltenen Zuschnitts durch die Umformvorrichtung erfolgt.

Ferner sind aus DE 10 2007 050 637 A1, JP S58-217318 A, US 4 104 349 A und DE 30 37 050 A1 Niederhaltervorrichtungen für eine Umformvorrichtung, die zu einer Herstellung von dreidimensionalen Formkörpern aus Verpackungsmaterial vorgesehen ist, bekannt, wobei die bekannten Niederhaltervorrichtungen zumindest ein Niederhalterelement und zumindest ein weiteres Niederhalterelement, die relativ zueinander beweglich gelagert sind und zu einem Halten des Verpackungsmaterials während eines Umformvorgangs vorgesehen sind, sowie zumindest eine Schneidvorrichtung, die dazu vorgesehen ist, das Verpackungsmaterial zumindest stellenweise zu durchtrennen und/oder zumindest stellenweise einzuschneiden, umfassen. Die Schneidvorrichtung der bekannten Niederhaltervorrichtungen ist derart an dem Niederhalterelement und/oder an dem weiteren Niederhalterelement angeordnet, dass die Schneidvorrichtung zumindest im Wesentlichen synchron zu einer Relativbewegung des Niederhalterelements und des weiteren Niederhalterelements bewegbar ist.

Die DE 10 2007 050637 A1 offenbart eine Vorrichtung und ein Verfahren gemäss Oberbegriffe der Ansprüche 1 und 10.

Die Aufgabe der Erfindung besteht insbesondere darin, eine gattungsgemäße Niederhaltervorrichtung, ein gattungsgemäßes Verfahren sowie eine gattungsgemäße Produktionsmaschine mit verbesserten Eigenschaften hinsichtlich einer konstruktiven Ausgestaltung und/oder hinsichtlich eines Prozessablaufs bereitzustellen. Die Aufgabe wird erfindungsgemäß insbesondere durch die Merkmale der Ansprüche 1, 8 und/oder 10 gelöst, während vorteilhafte Ausgestaltungen und Weiterbildungen der Erfindung den Unteransprüchen entnommen werden können.

### Offenbarung der Erfindung

Die Erfindung geht aus von einer Niederhaltervorrichtung für eine Umformvorrichtung, die zu einer Herstellung von dreidimensionalen Formkörpern aus Verpackungsmaterial vorgesehen ist, mit zumindest einem Niederhalterelement und mit zumindest einem weiteren Niederhalterelement, die relativ zueinander beweglich gelagert sind und zu einem Halten des Verpackungsmaterials während eines Umformvorgangs vorgesehen sind, sowie mit zumindest einer Schneidvorrichtung, die, insbesondere vor einem Umformen des Verpackungsmaterials, dazu vorgesehen ist, das Verpackungsmaterial zumindest stellenweise zu durchtrennen und/oder zumindest stellenweise einzuschneiden, wobei die Schneidvorrichtung derart an dem Niederhalterelement und/oder an dem weiteren Niederhalterelement angeordnet ist, dass die Schneidvorrichtung zumindest im Wesentlichen synchron zu einer Relativbewegung des Niederhalterelements und des weiteren Niederhalterelements bewegbar ist, insbesondere bewegt wird.

Es wird vorgeschlagen, dass die Schneidvorrichtung zumindest ein, insbesondere zumindest größtenteils um eine Durchführöffnung umlaufend angeordnetes, Schneidelement umfasst, das zumindest ein Schneidsegment und zumindest ein weiteres Schneidsegment umfasst, wobei das Schneidsegment eine maximale Höhe aufweist, die verschieden ist zu einer maximalen Höhe des weiteren Schneidsegments. Vorzugsweise ist die Schneidvorrichtung zusammen mit dem Niederhalterelement und/oder mit dem weiteren Niederhalterelement bewegbar. Die Schneidvorrichtung wird bevorzugt zusammen mit dem Niederhalterelement und/oder mit dem weiteren Niederhalterelement bewegt. Durch die erfindungsgemäße Ausgestaltung kann vorteilhaft ein Nachfließen von Verpackungsmaterial während eines Umformens gewährleistet werden und zugleich kann einer Verschiebung oder einem Versetzen des Zuschnitts relativ zum übrigen Verpackungsmaterial, das nicht umgeformt werden soll, vorteilhaft entgegengewirkt werden. Es kann vorteilhaft einer Verschiebung eines Mittelpunkts des Zuschnitts während einer Umformung des Zuschnitts entgegengewirkt werden, insbesondere dadurch, dass der Zuschnitt über die zumindest zwei, insbesondere an verschiedenen Seiten oder diametral gegenüberliegenden Positionen angeordneten, Verbindungsabschnitte relativ zum übrigen Verpackungsmaterial, das nicht umgeformt werden soll, gehalten werden kann. Es kann vorteilhaft ermöglicht werden, dass durch die Einschnitte geschwächte Bereiche, insbesondere Zuschnitte, des Verpackungsmaterials in einer Haupterstreckungsebene des Verpackungsmaterials angeordnet bleiben und insbesondere sich nicht nach oben oder unten verformen, da sie nach wie vor mit der Verpackungsmaterialbahn verbunden sind. Es kann vorteilhaft bei einem beschichteten Verpackungsmaterial gezielt eine Schicht, insbesondere eine Barriereschicht, eine Polymerschicht o. dgl., des Verpackungsmaterials durchtrennt werden, die einen großen Widerstand gegen Reißen aufweist, um insbesondere eine präzise Umformung zu ermöglichen. Es kann auch gezielt nur eine Papierschicht des Verpackungsmaterials durchtrennt werden, ohne dass die Barriereschicht, die Polymerschicht o. dgl., durchtrennt wird, um eine vorteilhafte Verbindung des Zuschnitts mit der Verpackungsmaterialbahn beizubehalten, während der Zuschnitt beim Umformen in eine Kavität gezogen wird. Es kann vorteilhaft eine konstruktive Verknüpfung einer Schneidfunktion und einer Niederhaltefunktion ermöglicht werden. Es kann vorteilhaft eine Schneidfunktion und eine Niederhaltefunktion in einem Prozessschritt erfolgen. Es kann vorteilhaft eine kostenoptimierte Montage und/oder ein kostenoptimierter Produktionsprozess mittels der erfindungsgemäßen Niederhaltervorrichtung erreicht werden. Es kann vorteilhaft eine präzise Positionierung des Verpackungsmaterials zu einer Herstellung eines dreidimensionalen Formkörpers ermöglicht werden, insbesondere da ein Einbringen eines Schnitts oder einer Schwächung in das Verpackungsmaterial zumindest im Wesentlichen zeitgleich mit einem Niederhalten des Verpackungsmaterials vor einem Umformen mittels der Umformvorrichtung erfolgt. Vorteilhafterweise kann ein zumindest im Wesentlichen zeitgleiches Einbringen eines Schnitts oder einer Schwächung in das Verpackungsmaterial sowie ein Niederhalten des Verpackungsmaterials in einer einzelnen Herstellungsstation einer Produktionsmaschine, die die erfindungsgemäße Niederhaltervorrichtung umfasst, konstruktiv einfach ermöglicht werden.

Vorzugsweise ist die Umformvorrichtung zu einer Umformung mit Formwerkzeugen vorgesehen. Es ist jedoch auch denkbar, dass die Umformvorrichtung zu einer Umformung mittels Wirkmedien vorgesehen ist. Unter "vorgesehen" soll insbesondere speziell eingerichtet, speziell ausgelegt, speziell ausgestattet und/oder speziell programmiert verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Die Umformvorrichtung kann als pneumatische, hydraulische oder hydromechanische Umformvorrichtung ausgebildet sein. Bevorzugt umfasst die Umformvorrichtung, insbesondere bei einer Ausgestaltung der Umformvorrichtung zu einer Umformung mit Formwerkzeugen, zumindest einen Stempel und zumindest eine Matrize, die relativ zueinander beweglich gelagert sind, insbesondere auf eine, einem Fachmann bereits bekannte Art und Weise. Die Niederhaltervorrichtung ist vorzugsweise an der Umformvorrichtung angeordnet, insbesondere an der Matrize. Bevorzugt ist die Niederhaltervorrichtung zumindest teilweise beweglich relativ zur Matrize gelagert. Es ist denkbar, dass lediglich das Niederhalterelement beweglich gelagert ist und das weitere Niederhalterelement ortsfest ist, dass das Niederhalterelement und das weitere Niederhalterelement beweglich gelagert sind oder dass das weitere Niederhalterelement beweglich gelagert ist und das Niederhalterelement ortsfest ist. Insbesondere ist das Niederhalterelement relativ zur Matrize beweglich gelagert. Das weitere Niederhalterelement ist vorzugsweise, insbesondere positionsfest, an der Matrize angeordnet. Es ist jedoch auch denkbar, dass das weitere Niederhalterelement relativ zur Matrize beweglich gelagert ist und das Niederhalterelement, insbesondere positionsfest, an der Matrize angeordnet ist. Der Stempel ist bevorzugt relativ zur Niederhaltervorrichtung und relativ zur Matrize beweglich gelagert, insbesondere auf eine, einem Fachmann bereits bekannte Art und Weise. Die Umformvorrichtung und die Niederhaltervorrichtung sind vorzugsweise zu einer Verarbeitung von Verpackungsmaterial für Lebensmittel vorgesehen.

Vorzugsweise ist die Schneidvorrichtung derart an dem Niederhalterelement und/oder an dem weiteren Niederhalterelement angeordnet, dass die Schneidvorrichtung zumindest im Wesentlichen synchron zu einer Relativbewegung des Niederhalterelements und des weiteren Niederhalterelements bewegbar ist, insbesondere bewegt wird. Die zumindest im Wesentlichen synchrone, insbesondere vollständig synchrone, Bewegung der Schneidvorrichtung mit der Relativbewegung des Niederhalterelements und des weiteren Niederhalterelements kann dadurch erfolgen, dass die Schneidvorrichtung zumindest teilweise an dem Niederhalterelement und/oder zumindest teilweise an dem weiteren Niederhalterelement fixiert ist und entsprechend zusammen mit dem Niederhalterelement und/oder dem weiteren Niederhalterelement bewegbar ist, insbesondere bewegt wird, oder dass ein Antrieb zur Bewegung der Schneidvorrichtung derart steuerbar oder regelbar ist, insbesondere gesteuert oder geregelt wird, dass eine Bewegung der Schneidvorrichtung mit einer Relativbewegung des Niederhalterelements und des weiteren Niederhalterelements zumindest im Wesentlichen synchron, insbesondere vollständig synchron, erfolgt. Bevorzugt ist ein Schneidelement der Schneidvorrichtung am Niederhalterelement angeordnet. Zumindest ein Gegenschneidelement der Schneidvorrichtung ist vorzugsweise am Niederhalterelement angeordnet. Vorzugsweise ist das Schneidelement zusammen mit dem Niederhalterelement relativ zum Gegenschneidelement, das an dem weiteren Niederhalterelement angeordnet ist, bewegbar. Insbesondere wird das Schneidelement zusammen mit dem Niederhalterelement relativ zum Gegenschneidelement, das an dem weiteren Niederhalterelement angeordnet ist, bewegt. Unter einer "zumindest im Wesentlichen synchronen Bewegung" soll insbesondere eine Bewegung von zumindest zwei Elementen oder Einheiten verstanden werden, wobei eine zeitliche Verzögerung eines Bewegungsbeginns eines der Elemente oder einer der Einheiten zu einem Bewegungsbeginn des anderen Elements der Elemente oder der anderen Einheit der Einheiten insbesondere kleiner ist als 1 s, vorzugsweise kleiner ist als 0,8 s, bevorzugt kleiner ist als 0,5 s und besonders bevorzugt kleiner ist als 0,1 s. Vorzugsweise erfolgt eine Schließbewegung oder eine Öffnungsbewegung der Schneidvorrichtung zusammen mit einer Schließbewegung oder einer Öffnungsbewegung der Niederhaltervorrichtung. Das Schneidelement und/oder das Gegenschneidelement führen vorzugsweise zusammen mit dem Niederhalterelement und/oder dem weiteren Niederhalterelement eine Schließbewegung durch.

Das Schneidelement und/oder das Gegenschneidelement können/kann eine einzelne Schneidkante aufweisen, insbesondere bilden, oder das Schneidelement und/oder das Gegenschneidelement können/kann eine Vielzahl von Schneidkanten, die beispielsweise durch Unterbrechungen, insbesondere Nuten o. dgl., voneinander beabstandet sind, aufweisen. Die Schneidkante/n kann/können jegliche/n, einem Fachmann als sinnvoll erachtete/ Schliff/e und/oder Formen aufweisen, wie beispielsweise einen Wellenschliff, einen Scandischliff, einen Flachschliff, einen balligen Anschliff, einen einseitigen Anschliff, einen Hohlschliff o. dgl., insbesondere in Abhängigkeit von einer Anwendung oder einem gewünschten Durchtrennschnitt/Einschnitt. Vorzugsweise sind das Schneidelement und das Gegenschneidelement dazu vorgesehen, das Verpackungsmaterial zumindest entlang einer Kontaktlinie oder einer Kontaktfläche zwischen der Schneidvorrichtung und dem Verpackungsmaterial zumindest stellenweise vollständig zu durchtrennen, insbesondere durch ein Abscheren. Das Schneidelement und das Gegenschneidelement wirken beispielsweise wie Schneidkanten einer Schere miteinander zusammen. Beispielsweise ist infolge eines Zusammenwirkens des Schneidelements und des Gegenschneidelements zumindest entlang einer Kontaktlinie oder einer Kontaktfläche zwischen der Schneidvorrichtung und dem Verpackungsmaterial eine Perforation in das Verpackungsmaterial einbringbar, eine ungleichmäßig verteilte Anordnung von Schnitten durch die gesamte Materialstärke des Verpackungsmaterials in das Verpackungsmaterial einbringbar, wobei insbesondere stellenweise Stege zwischen den Schnitten erhalten bleiben, o. dgl. Es ist alternativ oder zusätzlich denkbar, dass das Schneidelement und das Gegenschneidelement dazu vorgesehen sind, das Verpackungsmaterial zumindest entlang einer Kontaktlinie oder einer Kontaktfläche zwischen der Schneidvorrichtung und dem Verpackungsmaterial lediglich partiell zu durchtrennen oder zu prägen, insbesondere einzuschneiden. Beispielsweise ist denkbar, dass das Schneidelement zumindest entlang einer Kontaktlinie oder einer Kontaktfläche zwischen der Schneidvorrichtung und dem Verpackungsmaterial lediglich partiell in das Verpackungsmaterial eindringt und lediglich einzelne Schichten des Verpackungsmaterials durchtrennt werden, insbesondere jedoch nicht durch die gesamte Materialstärke des Verpackungsmaterials. Weitere, einem Fachmann als sinnvoll erscheinende Möglichkeiten zu einer, insbesondere zumindest teilweisen, Schwächung des Verpackungsmaterials zumindest entlang einer Kontaktlinie oder einer Kontaktfläche zwischen der Schneidvorrichtung und dem Verpackungsmaterial sind ebenfalls denkbar, wie beispielsweise durch einen zusätzlichen Wärmeeintrag im Bereich des Schneidelements und/oder des Gegenschneidelements o. dgl.

Bevorzugt bilden zumindest das Schneidsegment und das weitere Schneidsegment zusammen das Schneidelement. Es ist denkbar, dass das Schneidelement zusätzliche Schneidsegmente umfasst, wobei insbesondere eine Gesamtanzahl an Schneidsegmenten abhängig ist von einem Anwendungsgebiet der Schneidvorrichtung und vorzugsweise einer, einem Fachmann als sinnvoll erscheinenden Anzahl entspricht. Die Schneidsegmente, die zusammen das Schneidelement bilden, können getrennt voneinander ausgebildet sowie lösbar miteinander verbunden sein, insbesondere am Niederhalterelement angeordnet sein, oder einteilig miteinander ausgebildet sowie unlösbar miteinander verbunden sein, insbesondere am Niederhalterelement angeordnet sein. Die Schneidsegmente können mittels einer stoff-, kraft- und/oder formschlüssigen Verbindung an dem Niederhalterelement fixiert sein, wie beispielsweise mittels einer Schraubverbindung, einer Klemmverbindung, einer Nietverbindung, einer Schweißverbindung o. dgl. Vorzugsweise verläuft die maximale Höhe des Schneidsegments und/oder die maximale Höhe des weiteren Schneidsegments entlang einer sich zumindest im Wesentlichen senkrecht zu einer Niederhalterfläche des Niederhalterelements erstreckenden Richtung. Der Ausdruck "im Wesentlichen senkrecht" soll insbesondere eine Ausrichtung einer Richtung relativ zu einer Bezugsrichtung definieren, wobei die Richtung und die Bezugsrichtung, insbesondere in einer Projektionsebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist. Bevorzugt verläuft die maximale Höhe des Schneidsegments und/oder die maximale Höhe des weiteren Schneidsegments entlang einer sich zumindest im Wesentlichen parallel zu einer Bewegungsrichtung des Niederhalterelements relativ zum weiteren Niederhalterelement verlaufenden Richtung. Unter "im Wesentlichen parallel" soll insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Bevorzugt ist die maximale Höhe des Schneidsegments größer als die maximale Höhe des weiteren Schneidsegments. Es ist jedoch auch denkbar, dass die maximale Höhe des Schneidsegments geringer ist als die maximale Höhe des weiteren Schneidsegments. Vorzugsweise entspricht die maximale Höhe des weiteren Schneidsegments mehr als 25 %, bevorzugt mehr als 50 % und ganz besonders bevorzugt weniger als 90 % der maximalen Höhe des Schneidsegments. Bevorzugt ist das Schneidelement zu einem Einschneiden des Verpackungsmaterials vorgesehen. Erfindungsgemäss sind das Schneidsegment und das weitere Schneidsegment zu einem Einschneiden des Verpackungsmaterials vorgesehen, wobei das Verpackungsmaterial nicht vollständig, insbesondere nicht entlang der gesamten Materialstärke, durch das Schneidsegment und/oder das weitere Schneidsegment durchtrennt wird. Die maximale Höhe des Schneidsegments und/oder die maximale Höhe des weiteren Schneidsegments entsprechen insbesondere weniger als 95 %, bevorzugt weniger als 90 % und besonders bevorzugt weniger als 80 % einer maximalen Materialstärke des Verpackungsmaterials.

Des Weiteren wird vorgeschlagen, dass die Schneidvorrichtung derart ausgebildet ist, dass das Verpackungsmaterial, insbesondere durch ein Zusammenwirken des Schneidelements und des Gegenschneidelements, derart zumindest stellenweise durchtrennt wird und/oder zumindest stellenweise eingeschnitten wird, dass ein aus dem Verpackungsmaterial erzeugbarer Zuschnitt, aus dem mittels der Umformvorrichtung ein dreidimensionaler Formkörper, insbesondere ein Lebensmittelaufnahmebehältnis, herstellbar ist, über mehr als zwei Verbindungsabschnitte, insbesondere Verbindungsstege, mit dem Verpackungsmaterial verbunden ist. Es ist denkbar, dass die Niederhaltervorrichtung zur Lösung der oben genannten Aufgabe in einer alternativen Ausgestaltung unabhängig von der synchronen Bewegung der Schneidvorrichtung mit dem Niederhalterelement oder mit dem weiteren Niederhalterelement ausgebildet ist. Vorzugsweise umfasst die Niederhaltervorrichtung in der alternativen Ausgestaltung, insbesondere in der unabhängig von der synchronen Bewegung der Schneidvorrichtung mit dem Niederhalterelement oder mit dem weiteren Niederhalterelement ausgebildeten Ausgestaltung, zumindest ein Niederhalterelement und zumindest ein weiteres Niederhalterelement, die relativ zueinander beweglich gelagert sind und zu einem Halten des Verpackungsmaterials während eines Umformvorgangs vorgesehen sind, sowie zumindest eine Schneidvorrichtung, die, insbesondere vor einem Umformen des Verpackungsmaterials, dazu vorgesehen ist, das Verpackungsmaterial zumindest stellenweise zu durchtrennen und/oder zumindest stellenweise einzuschneiden, wobei die Schneidvorrichtung derart ausgebildet ist, dass das Verpackungsmaterial derart zumindest stellenweise durchtrennt wird und/oder zumindest stellenweise eingeschnitten wird, dass ein aus dem Verpackungsmaterial erzeugbarer Zuschnitt, aus dem mittels der Umformvorrichtung ein dreidimensionaler Formkörper, insbesondere ein Lebensmittelaufnahmebehältnis, herstellbar ist, über zumindest zwei, insbesondere mehr als zwei, Verbindungsabschnitte, insbesondere Verbindungsstege, mit dem Verpackungsmaterial verbunden ist. Vorzugsweise ist die Schneidvorrichtung, insbesondere in zumindest einem Ausführungsbeispiel, derart ausgebildet, dass das Schneidelement und/oder das Gegenschneidelement eine Vielzahl von Schneidkanten, die beispielsweise durch Unterbrechungen, insbesondere Nuten o. dgl., voneinander beabstandet sind, aufweist/aufweisen, insbesondere um einen Zuschnitt zu erzeugen, der über mehr als zwei Verbindungsabschnitte, insbesondere Verbindungsstege, mit dem Verpackungsmaterial verbunden ist. Durch die erfindungsgemäße Ausgestaltung kann vorteilhaft ein Nachfließen von Verpackungsmaterial während eines Umformens gewährleistet werden und zugleich kann einer Verschiebung oder einem Versetzen des Zuschnitts relativ zum übrigen Verpackungsmaterial, das nicht umgeformt werden soll, vorteilhaft entgegengewirkt werden. Es kann vorteilhaft einer Verschiebung eines Mittelpunkts des Zuschnitts während einer Umformung des Zuschnitts entgegengewirkt werden, insbesondere dadurch, dass der Zuschnitt über die zumindest zwei, insbesondere an verschiedenen Seiten oder diametral gegenüberliegenden Positionen angeordneten, Verbindungsabschnitte relativ zum übrigen Verpackungsmaterial, das nicht umgeformt werden soll, gehalten werden kann. Es kann vorteilhaft eine konstruktive Verknüpfung einer Schneidfunktion und einer Niederhaltefunktion ermöglicht werden. Es kann vorteilhaft eine Schneidfunktion und eine Niederhaltefunktion in einem Prozessschritt erfolgen. Es kann vorteilhaft eine kostenoptimierte Montage und/oder ein kostenoptimierter Produktionsprozess mittels der erfindungsgemäßen Niederhaltervorrichtung erreicht werden. Es kann vorteilhaft eine präzise Positionierung des Verpackungsmaterials zu einer Herstellung eines dreidimensionalen Formkörpers ermöglicht werden. Vorteilhafterweise kann ein zumindest im Wesentlichen zeitgleiches Einbringen eines Schnitts oder einer Schwächung in das Verpackungsmaterial sowie ein Niederhalten des Verpackungsmaterials in einer einzelnen Herstellungsstation einer Produktionsmaschine, die die erfindungsgemäße Niederhaltervorrichtung umfasst, konstruktiv einfach ermöglicht werden.

Ferner wird vorgeschlagen, dass die Schneidvorrichtung zumindest das Schneidelement und zumindest ein, insbesondere das bereits zuvor genannte, Gegenschneidelement aufweist, wobei das Schneidelement am Niederhalterelement fixiert ist und das Gegenschneidelement am weiteren Niederhalterelement fixiert ist. Das Schneidelement kann mittels einer stoff-, kraft- und/oder formschlüssigen Verbindung an dem Niederhalterelement fixiert sein, wie beispielsweise mittels einer Schraubverbindung, einer Klemmverbindung, einer Nietverbindung, einer Schweißverbindung o. dgl. Vorzugsweise ist das Schneidelement austauschbar, insbesondere zerstörungsfrei trennbar, an dem Niederhalterelement fixiert. Es ist jedoch auch denkbar, dass das Schneidelement unlösbar an dem Niederhalterelement fixiert ist, wie beispielsweise durch eine Schweißverbindung oder durch eine Kombination einer Schweißverbindung und einer form- und/oder stoffschlüssigen Verbindung, wie beispielsweise durch eine verschweißte Schraubverbindung, durch eine verschweißte Nietverbindung o. dgl. Das Gegenschneidelement kann mittels einer stoff-, kraft- und/oder formschlüssigen Verbindung an dem weiteren Niederhalterelement fixiert sein, wie beispielsweise mittels einer Schraubverbindung, einer Klemmverbindung, einer Nietverbindung, einer Schweißverbindung o. dgl. Vorzugsweise ist das Gegenschneidelement austauschbar, insbesondere zerstörungsfrei trennbar, an dem weiteren Niederhalterelement fixiert. Es ist jedoch auch denkbar, dass das Gegenschneidelement unlösbar an dem weiteren Niederhalterelement fixiert ist, wie beispielsweise durch eine Schweißverbindung oder durch eine Kombination einer Schweißverbindung und einer form- und/oder stoffschlüssigen Verbindung, wie beispielsweise durch eine verschweißte Schraubverbindung, durch eine verschweißte Nietverbindung o. dgl. Mittels der erfindungsgemäßen Ausgestaltung kann vorteilhaft eine konstruktiv einfache Integration einer Schneidfunktion in die Niederhaltervorrichtung ermöglicht werden. Es kann vorteilhaft eine Wartungsfunktion durch einen einfachen Austausch einer abgenutzten Schneidkante der Schneidvorrichtung erreicht werden, insbesondere bei einer lösbaren Fixierung der Schneidvorrichtung an der Niederhaltervorrichtung. Es kann ein kostengünstiger Austausch ermöglicht werden, da lediglich die Schneidvorrichtung bei einem hohen Verschleiß ausgetauscht werden kann, ohne die gesamte Niederhaltervorrichtung austauschen zu müssen. Es kann vorteilhaft eine konstruktive Verknüpfung einer Schneidfunktion und einer Niederhaltefunktion ermöglicht werden. Es kann vorteilhaft eine Schneidfunktion und eine Niederhaltefunktion in einem Prozessschritt erfolgen. Es kann vorteilhaft eine kostenoptimierte Montage und/oder ein kostenoptimierter Produktionsprozess mittels der erfindungsgemäßen Niederhaltervorrichtung erreicht werden. Es kann vorteilhaft eine präzise Positionierung des Verpackungsmaterials zu einer Herstellung eines dreidimensionalen Formkörpers ermöglicht werden, insbesondere da ein Einbringen eines Schnitts oder einer Schwächung in das Verpackungsmaterial zumindest im Wesentlichen zeitgleich mit einem Niederhalten des Verpackungsmaterials vor einem Umformen mittels der Umformvorrichtung erfolgt. Vorteilhafterweise kann ein zumindest im Wesentlichen zeitgleiches Einbringen eines Schnitts oder einer Schwächung in das Verpackungsmaterial sowie ein Niederhalten des Verpackungsmaterials in einer einzelnen Herstellungsstation einer Produktionsmaschine, die die erfindungsgemäße Niederhaltervorrichtung umfasst, konstruktiv einfach ermöglicht werden.

Des Weiteren wird vorgeschlagen, dass die Schneidvorrichtung zumindest das Schneidelement und zumindest ein, insbesondere das bereits zuvor genannte, Gegenschneidelement aufweist, wobei das Schneidelement einteilig mit dem Niederhalterelement ausgebildet ist und das Gegenschneidelement einteilig mit dem weiteren Niederhalterelement ausgebildet ist. Unter "einteilig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Mittels der erfindungsgemäßen Ausgestaltung kann vorteilhaft eine konstruktiv einfache Verknüpfung einer Schneidfunktion und einer Niederhaltefunktion ermöglicht werden. Es kann besonders vorteilhaft eine Schneidfunktion und eine Niederhaltefunktion in einem Prozessschritt erfolgen. Es kann vorteilhaft eine kostenoptimierte Montage und/oder eine zeitoptimierte Wartung erreicht werden. Es kann vorteilhaft eine präzise Positionierung des Verpackungsmaterials zu einer Herstellung eines dreidimensionalen Formkörpers ermöglicht werden, insbesondere da ein Einbringen eines Schnitts oder einer Schwächung in das Verpackungsmaterial zumindest im Wesentlichen zeitgleich mit einem Niederhalten des Verpackungsmaterials vor einem Umformen mittels der Umformvorrichtung erfolgt. Vorteilhafterweise kann ein zumindest im Wesentlichen zeitgleiches Einbringen eines Schnitts oder einer Schwächung in das Verpackungsmaterial sowie ein Niederhalten des Verpackungsmaterials in einer einzelnen Herstellungsstation einer Produktionsmaschine, die die erfindungsgemäße Niederhaltervorrichtung umfasst, konstruktiv einfach ermöglicht werden.

Weiterhin wird vorgeschlagen, dass die Schneidvorrichtung zumindest das Schneidelement und zumindest ein, insbesondere das bereits zuvor genannte, Gegenschneidelement aufweist, wobei das Schneidelement am Niederhalterelement fixiert ist und sich zumindest größtenteils um eine, insbesondere die bereits zuvor genannte, Durchführöffnung des Niederhalterelements herum erstreckt, und wobei das Gegenschneidelement am weiteren Niederhalterelement fixiert ist und sich zumindest größtenteils um eine Durchführöffnung des weiteren Niederhalterelements herum erstreckt. Die Durchführöffnung des Niederhalterelements und die Durchführöffnung des weiteren Niederhalterelements sind vorzugsweise auf eine, einem Fachmann bereits bekannte Art und Weise zu einem Ermöglichen einer Bewegung des Stempels durch das Niederhalterelement und das weitere Niederhalterelement hindurch vorgesehen, insbesondere in einem an der Matrize angeordneten Zustand der Niederhaltervorrichtung, insbesondere zu einer Umformung des zwischen dem Niederhalterelement und dem weiteren Niederhalterelement gehaltenen Zuschnitts mittels des Stempels. Bevorzugt ist die Durchführöffnung des Niederhalterelements und die Durchführöffnung des weiteren Niederhalterelements zumindest im Wesentlichen deckungsgleich, insbesondere identisch, ausgebildet, vorzugsweise um einen Positionstausch des Niederhalterelements und des weiteren Niederhalterelements an der Matrize vornehmen zu können. Beispielsweise kann das weitere Niederhalterelement unten angeordnet sein und das Niederhalterelement kann oben angeordnet sein, wobei die Positionen, insbesondere infolge der zumindest im Wesentlichen deckungsgleich, insbesondere identisch, ausgebildeten Durchführöffnungen, austauschbar sind. Beispielsweise kann in Abhängigkeit von einer Prozessanforderung an die einzubringenden Schnitte eine Anordnung des Niederhalterelements mit dem daran angeordneten Schneidelement oben und eine Anordnung des weiteren Niederhalterelements mit dem daran angeordneten Gegenschneidelement unten sinnvoll sein, während bei einer alternativen Prozessanforderung an die einzubringenden Schnitte eine Anordnung des Niederhalterelements mit dem daran angeordneten Schneidelement unten und eine Anordnung des weiteren Niederhalterelements mit dem daran angeordneten Gegenschneidelement oben sinnvoll sein kann. Oben und unten beziehen sich insbesondere auf eine Anordnung des Niederhalterelements mit dem daran angeordneten Schneidelement unten und eine Anordnung des weiteren Niederhalterelements mit dem daran angeordneten Gegenschneidelement an der Umformvorrichtung. Unter "größtenteils" soll insbesondere zumindest mehr als 50 %, bevorzugt mehr als 70 % und besonders bevorzugt mehr als 90 % einer Bezugsgröße verstanden werden. Insbesondere erstreckt sich das Schneidelement, insbesondere eine Gesamtlänge der Schneidkante/n des Schneidelements, zu mehr als 50 %, bevorzugt mehr als 70 % und besonders bevorzugt mehr als 90 % entlang einer Gesamtumfangserstreckung der Durchführöffnung des Niederhalterelements um die Durchführöffnung des Niederhalterelements herum. Vorzugsweise umgibt das Schneidelement, insbesondere bis auf eine oder mehrere schlitzförmige Unterbrechungen in der Schneidkante des Schneidelements, die Durchführöffnung des Niederhalterelements vollständig, insbesondere in zumindest einem Ausführungsbeispiel der Niederhaltervorrichtung. Insbesondere erstreckt sich das Gegenschneidelement, insbesondere eine Gesamtlänge der Schneidkante/n des Gegenschneidelements, zu mehr als 50 %, bevorzugt mehr als 70 % und besonders bevorzugt mehr als 90 % entlang einer Gesamtumfangserstreckung der Durchführöffnung des weiteren Niederhalterelements um die Durchführöffnung des weiteren Niederhalterelements herum. Vorzugsweise umgibt das Gegenschneidelement die Durchführöffnung des weiteren Niederhalterelements vollständig, insbesondere in zumindest einem Ausführungsbeispiel der Niederhaltervorrichtung. Mittels der erfindungsgemäßen Ausgestaltung kann vorteilhaft konstruktiv einfach eine Einbringung eines Schnitts oder einer Schwächung in das Verpackungsmaterial realisiert werden, wobei ein Zuschnitt stellenweise noch mit dem Verpackungsmaterial verbunden ist. Es kann vorteilhaft ein Nachfließen von Verpackungsmaterial während eines Umformens gewährleistet werden und zugleich kann einer Verschiebung oder einem Versetzen des Zuschnitts relativ zum übrigen Verpackungsmaterial, das nicht umgeformt werden soll, vorteilhaft entgegengewirkt werden. Es kann vorteilhaft eine konstruktive Verknüpfung einer Schneidfunktion und einer Niederhaltefunktion ermöglicht werden. Es kann vorteilhaft eine Schneidfunktion und eine Niederhaltefunktion in einem Prozessschritt erfolgen. Es kann vorteilhaft eine kostenoptimierte Montage und/oder ein kostenoptimierter Produktionsprozess mittels der erfindungsgemäßen Niederhaltervorrichtung erreicht werden. Es kann vorteilhaft eine präzise Positionierung des Verpackungsmaterials zu einer Herstellung eines dreidimensionalen Formkörpers ermöglicht werden, insbesondere da ein Einbringen eines Schnitts oder einer Schwächung in das Verpackungsmaterial zumindest im Wesentlichen zeitgleich mit einem Niederhalten des Verpackungsmaterials vor einem Umformen mittels der Umformvorrichtung erfolgt. Vorteilhafterweise kann ein zumindest im Wesentlichen zeitgleiches Einbringen eines Schnitts oder einer Schwächung in das Verpackungsmaterial sowie ein Niederhalten des Verpackungsmaterials in einer einzelnen Herstellungsstation einer Produktionsmaschine, die die erfindungsgemäße Niederhaltervorrichtung umfasst, konstruktiv einfach ermöglicht werden.

Zudem wird vorgeschlagen, dass die Niederhaltervorrichtung zumindest eine, insbesondere eine Vielzahl an Nuten und/oder an Stegen umfassende, Oberflächenstruktureinheit umfasst, die zumindest zwischen einer, insbesondere der bereits zuvor gennannten, Durchführöffnung des Niederhalterelements und des am Niederhalterelement angeordneten Schneidelements der Schneidvorrichtung und/oder zwischen einer, insbesondere der bereits zuvor gennannten, Durchführöffnung des weiteren Niederhalterelements und eines, insbesondere des bereits zuvor genannten, am weiteren Niederhalterelement angeordneten Gegenschneidelements der Schneidvorrichtung angeordnet ist. Vorzugsweise ist die Oberflächenstruktureinheit als Riffelung, als Gitterstruktur o. dgl. ausgebildet. Mittels der erfindungsgemäßen Ausgestaltung kann vorteilhaft eine Bildung von Falten während einer Umformung des Zuschnitts gesteuert oder beeinflusst werden, insbesondere gezielt entgegengewirkt werden. Es kann vorteilhaft ein Nachfließen von Verpackungsmaterial während eines Umformens gewährleistet werden und zugleich kann einer Verschiebung oder einem Versetzen des Zuschnitts relativ zum übrigen Verpackungsmaterial, das nicht umgeformt werden soll, vorteilhaft entgegengewirkt werden.

Des Weiteren wird vorgeschlagen, dass die Schneidvorrichtung zumindest das, insbesondere zumindest größtenteils um eine, insbesondere die bereits zuvor genannte, Durchführöffnung umlaufend angeordnete, Schneidelement und eine Vielzahl an schneidfreien Bereichen aufweist, wobei die schneidfreien Bereiche, insbesondere zu einer Unterteilung einer Schneidkante des Schneidelements, unregelmäßig verteilt am Schneidelement angeordnet sind. Bevorzugt sind die schneidfreien Bereiche als Nuten oder Schlitze in der Schneidkante ausgebildet. Es ist jedoch auch denkbar, dass das Schneidelement eine Vielzahl von Schneidkanten aufweist, die durch Unterbrechungen, insbesondere Nuten o. dgl., voneinander beabstandet sind, wobei die Unterbrechungen die schneidfreien Bereiche bilden und die Vielzahl von Schneidkanten das Schneidelement bilden. Mittels der erfindungsgemäßen Ausgestaltung kann vorteilhaft konstruktiv einfach eine Einbringung eines Schnitts oder einer Schwächung in das Verpackungsmaterial realisiert werden, wobei ein Zuschnitt stellenweise noch mit dem Verpackungsmaterial verbunden ist. Es kann vorteilhaft ein Nachfließen von Verpackungsmaterial während eines Umformens gewährleistet werden und zugleich kann einer Verschiebung oder einem Versetzen des Zuschnitts relativ zum übrigen Verpackungsmaterial, das nicht umgeformt werden soll, vorteilhaft entgegengewirkt werden. Es kann vorteilhaft eine konstruktive Verknüpfung einer Schneidfunktion und einer Niederhaltefunktion ermöglicht werden. Es kann vorteilhaft eine Schneidfunktion und eine Niederhaltefunktion in einem Prozessschritt erfolgen.

Ferner wird eine Produktionsmaschine zu einer Verarbeitung von Verpackungsmaterial, insbesondere Faserwerkstoff umfassendes Verpackungsmaterial, mit zumindest einer, insbesondere zumindest einen Stempel und eine Matrize aufweisende, Umformvorrichtung und mit zumindest einer an der Umformvorrichtung angeordneten erfindungsgemäßen Niederhaltervorrichtung vorgeschlagen. Die Produktionsmaschine kann weitere, einem Fachmann als sinnvoll erscheinende Vorrichtungen und/oder Einheiten umfassen, die zu einer Verarbeitung von Verpackungsmaterial nutzbar sind. Die Produktionsmaschine ist vorzugsweise zu einer Verarbeitung von Verpackungsmaterial für Lebensmittel vorgesehen. Beispielsweise umfasst die Produktionsmaschine zusätzlich eine Abfüllvorrichtung zu einer Abfüllung von Produkten, insbesondere Lebensmitteln, in die mittels der Umformvorrichtung erzeugten Formkörper, insbesondere Lebensmittelaufnahmebehältnisse. Weitere Vorrichtungen und/oder Einheiten können beispielsweise eine Transportvorrichtung, eine Handhabungsvorrichtung, eine Sterilisationsvorrichtung, eine Verschlussvorrichtung, eine Umverpackungsvorrichtung o. dgl. sein. Mittels der erfindungsgemäßen Ausgestaltung kann vorteilhaft eine konstruktive Verknüpfung einer Schneidfunktion und einer Niederhaltefunktion ermöglicht werden. Es kann vorteilhaft eine Schneidfunktion und eine Niederhaltefunktion in einem Prozessschritt erfolgen. Es kann vorteilhaft eine kostenoptimierte Montage und/oder ein kostenoptimierter Produktionsprozess mittels der erfindungsgemäßen Niederhaltervorrichtung erreicht werden. Es kann vorteilhaft eine präzise Positionierung des Verpackungsmaterials zu einer Herstellung eines dreidimensionalen Formkörpers ermöglicht werden, insbesondere da ein Einbringen eines Schnitts oder einer Schwächung in das Verpackungsmaterial zumindest im Wesentlichen zeitgleich mit einem Niederhalten des Verpackungsmaterials vor einem Umformen mittels der Umformvorrichtung erfolgt. Vorteilhafterweise kann ein zumindest im Wesentlichen zeitgleiches Einbringen eines Schnitts oder einer Schwächung in das Verpackungsmaterial sowie ein Niederhalten des Verpackungsmaterials in einer einzelnen Herstellungsstation einer Produktionsmaschine, die die erfindungsgemäße Niederhaltervorrichtung umfasst, konstruktiv einfach ermöglicht werden.

Zudem wird vorgeschlagen, dass die Produktionsmaschine zumindest eine Steuer- oder Regeleinheit umfasst, die dazu eingerichtet ist, eine zumindest im Wesentlichen synchrone Bewegung des Niederhalterelements und des Schneidelements der Schneidvorrichtung und/oder eine zumindest im Wesentlichen synchrone Bewegung des weiteren Niederhalterelements und eines, insbesondere des bereits zuvor genannten, Gegenschneidelements der Schneidvorrichtung zu steuern oder zu regeln. Bevorzugt ist die Steuer- oder Regeleinheit, insbesondere in zumindest einem Ausführungsbeispiel, dazu vorgesehen, einen oder mehrere Antrieb/e derart anzusteuern, dass die Niederhaltervorrichtung zusammen mit der Schneidvorrichtung bewegt wird, insbesondere synchron, bewegt wird, insbesondere eine Schließbewegung durchführt. Es ist denkbar, dass das Schneidelement relativ zum Niederhalterelement, insbesondere auch zum weiteren Niederhalterelement und zur Matrize, beweglich gelagert ist und mittels eines eigenen Antriebs beweglich ist, wobei eine Bewegung des Schneidelements, insbesondere der Antrieb des Schneidelements, mittels der Steuer- oder Regeleinheit derart gesteuert wird, dass das Schneidelement synchron mit dem Niederhalterelement bewegt wird. Dies könnte auch auf das Gegenschneidelement und das weitere Niederhalterelement Anwendung finden. Mittels der erfindungsgemäßen Ausgestaltung kann vorteilhaft eine Schneidfunktion und eine Niederhaltefunktion in einem Prozessschritt erfolgen. Es kann vorteilhaft ein Einbringen eines Schnitts oder einer Schwächung in das Verpackungsmaterial zumindest im Wesentlichen zeitgleich mit einem Niederhalten des Verpackungsmaterials vor einem Umformen mittels der Umformvorrichtung erfolgen. Vorteilhafterweise kann ein zumindest im Wesentlichen zeitgleiches Einbringen eines Schnitts oder einer Schwächung in das Verpackungsmaterial sowie ein Niederhalten des Verpackungsmaterials konstruktiv einfach ermöglicht werden oder einfach auf bereits bestehenden Produktionsmaschinen implementiert werden. Ferner geht die Erfindung aus von einem Verfahren zu einer Umformung von Verpackungsmaterial, insbesondere Faserwerkstoff umfassendes Verpackungsmaterial, mittels einer Umformvorrichtung, an der eine erfindungsgemäße Niederhaltervorrichtung angeordnet ist, wobei zumindest das Niederhalterelement und das Schneidelement der Schneidvorrichtung zumindest im Wesentlichen synchron bewegt werden, insbesondere bevor ein Umformen des Verpackungsmaterials mit der Umformvorrichtung erfolgt. Es wird vorgeschlagen, dass mittels des zumindest einen Schneidsegments ein Einschnitt in das Verpackungsmaterial eingebracht wird und mittels des zumindest einen weiteren Schneidsegments ein weiterer Einschnitt in das Verpackungsmaterial eingebracht wird, wobei eine maximale Schnitttiefe des Einschnitts

verschieden ist zu einer maximalen Schnitttiefe des weiteren Einschnitts. Durch die erfindungsgemäße Ausgestaltung kann vorteilhaft eine Schneidfunktion und eine Niederhaltefunktion in einem Prozessschritt erfolgen. Es kann vorteilhaft eine präzise Positionierung des Verpackungsmaterials zu einer Herstellung eines dreidimensionalen Formkörpers ermöglicht werden, insbesondere da ein Einbringen eines Schnitts oder einer Schwächung in das Verpackungsmaterial zumindest im Wesentlichen zeitgleich mit einem Niederhalten des Verpackungsmaterials vor einem Umformen mittels der Umformvorrichtung erfolgt.

Des Weiteren wird vorgeschlagen, dass das Verpackungsmaterial durch ein Schließen der Niederhaltervorrichtung zumindest stellenweise durchtrennt wird und/oder eingeschnitten wird, insbesondere bevor ein Umformen des Verpackungsmaterials mit der Umformvorrichtung erfolgt. Mittels der erfindungsgemäßen Ausgestaltung kann vorteilhaft ein zumindest im Wesentlichen zeitgleiches Einbringen eines Schnitts oder einer Schwächung in das Verpackungsmaterial sowie ein Niederhalten des Verpackungsmaterials in einer einzelnen Herstellungsstation einer Produktionsmaschine, die die erfindungsgemäße Niederhaltervorrichtung umfasst, konstruktiv einfach ermöglicht werden.

Zudem wird vorgeschlagen, dass die Schneidvorrichtung das Verpackungsmaterial derart stellenweise durchtrennt und/oder zumindest stellenweise einschneidet, dass ein aus dem Verpackungsmaterial erzeugter Zuschnitt, aus dem mittels der Umformvorrichtung ein dreidimensionaler Formkörper, insbesondere ein Lebensmittelaufnahmebehältnis, hergestellt wird, über zumindest zwei, insbesondere mehr als zwei, Verbindungsabschnitte, insbesondere Verbindungsstege, mit dem Verpackungsmaterial verbunden ist. Es ist denkbar, dass das Verfahren zur Lösung der oben genannten Aufgabe in einer alternativen Ausgestaltung unabhängig von einer synchronen Bewegung des Schneidelements und des Niederhalterelements ausgebildet ist. Vorzugsweise ist das Verfahren zu einer Umformung von Verpackungsmaterial, insbesondere Faserwerkstoff umfassendes Verpackungsmaterial, mittels einer Umformvorrichtung, an der eine erfindungsgemäße Niederhaltervorrichtung angeordnet ist, in der alternativen Ausgestaltung, insbesondere in der unabhängig von der synchronen Bewegung des Schneidelements und des Niederhalterelements ausgebildeten Ausgestaltung, derart ausgebildet, dass die Schneidvorrichtung das Verpackungsmaterial derart stellenweise durchtrennt und/oder zumindest stellenweise einschneidet, dass ein aus dem Verpackungsmaterial erzeugter Zuschnitt, aus dem mittels der Umformvorrichtung ein dreidimensionaler Formkörper, insbesondere ein Lebensmittelaufnahmebehältnis, hergestellt wird, über mehr als zwei Verbindungsabschnitte, insbesondere Verbindungsstege, mit dem Verpackungsmaterial verbunden ist. Mittels der erfindungsgemäßen Ausgestaltung kann vorteilhaft ein Nachfließen von Verpackungsmaterial während eines Umformens gewährleistet werden und zugleich kann einer Verschiebung oder einem Versetzen des Zuschnitts relativ zum übrigen Verpackungsmaterial, das nicht umgeformt werden soll, vorteilhaft entgegengewirkt werden. Es kann vorteilhaft eine prozesssichere Verknüpfung einer Schneidfunktion und einer Niederhaltefunktion ermöglicht werden. Vorteilhafterweise kann ein zumindest im Wesentlichen zeitgleiches Einbringen eines Schnitts oder einer Schwächung in das Verpackungsmaterial sowie ein Niederhalten des Verpackungsmaterials in einer einzelnen Herstellungsstation einer Produktionsmaschine, die die erfindungsgemäße Niederhaltervorrichtung umfasst, konstruktiv einfach ermöglicht werden.

Weiterhin wird vorgeschlagen, dass das Verpackungsmaterial, insbesondere zu einem Erzeugen des Zuschnitts, aus dem mittels der Umformvorrichtung ein dreidimensionaler Formkörper, insbesondere ein Lebensmittelaufnahmebehältnis, herstellbar ist, zumindest stellenweise eingeschnitten, insbesondere nicht vollständig durchtrennt, wird und eine maximale Schnitttiefe von zumindest einem Einschnitt abhängig ist von einer Faserrichtung des Verpackungsmaterials und/oder von einer Förderrichtung einer, insbesondere die bereits zuvor genannte, die Niederhaltervorrichtung umfassenden Produktionsmaschine. Bevorzugt verläuft die Faserrichtung des Verpackungsmaterials zumindest im Wesentlichen parallel zur Förderrichtung der Produktionsmaschine. Vorzugsweise verlaufen die Förderrichtung und die Faserrichtung des Verpackungsmaterials, insbesondere zumindest während eines Transports des Verpackungsmaterials durch die Produktionsmaschine, in einer sich zumindest im Wesentlichen parallel zu einer Haupterstreckungsebene des Verpackungsmaterials und/oder zur Niederhalterfläche erstreckenden Ebene. Erfindungsgemäss weist ein mittels des Schneidelements in das Verpackungsmaterial eingebrachter Einschnitt, der sich größtenteils entlang der Faserrichtung und/oder entlang der Förderrichtung erstreckt, eine maximale Schnitttiefe auf, die verschieden ist zu einer maximalen Schnitttiefe eines mittels des Schneidelements in das Verpackungsmaterial eingebrachten weiteren Einschnitts, der sich größtenteils quer, insbesondere zumindest im Wesentlichen senkrecht, zur Faserrichtung und/oder zur Förderrichtung erstreckt. Durch die erfindungsgemäße Ausgestaltung kann vorteilhaft ein Nachfließen von Verpackungsmaterial während eines Umformens gewährleistet werden und zugleich kann einer Verschiebung oder einem Versetzen des Zuschnitts relativ zum übrigen Verpackungsmaterial, das nicht umgeformt werden soll, vorteilhaft entgegengewirkt werden. Es kann vorteilhaft ein Einschneiden an unterschiedlichen Positionen des Verpackungsmaterials in Abhängigkeit von einem Verwendungszweck des Verpackungsmaterials realisiert werden. Es kann vorteilhaft ermöglicht werden, dass durch die Einschnitte geschwächte Bereiche, insbesondere Zuschnitte, des Verpackungsmaterials in einer Haupterstreckungsebene des Verpackungsmaterials angeordnet bleiben und insbesondere sich nicht nach oben oder unten verformen, da sie nach wie vor mit der Verpackungsmaterialbahn verbunden sind.

Des Weiteren wird vorgeschlagen, dass das Verpackungsmaterial, insbesondere zu einem Erzeugen des Zuschnitts, aus dem mittels der Umformvorrichtung ein dreidimensionaler Formkörper, insbesondere ein Lebensmittelaufnahmebehältnis, herstellbar ist, zumindest stellenweise eingeschnitten wird, wobei zumindest der sich größtenteils entlang einer Faserrichtung des Verpackungsmaterials und/oder entlang einer Förderrichtung einer, insbesondere der bereits zuvor genannten, die Niederhaltervorrichtung umfassenden Produktionsmaschine erstreckende Einschnitt und zumindest der sich größtenteils entlang einer quer, insbesondere zumindest im Wesentlichen senkrecht, zur Faserrichtung und/oder zur Förderrichtung verlaufenden Querrichtung erstreckende weitere Einschnitt in das Verpackungsmaterial eingebracht wird, wobei erfindungsgemäss eine maximale Schnitttiefe des Einschnitts geringer ist als eine maximale Schnitttiefe des weiteren Einschnitts. Vorzugsweise verlaufen die Faserrichtung und die Querrichtung, insbesondere zumindest während eines Transports des Verpackungsmaterials durch die Produktionsmaschine, in einer sich zumindest im Wesentlichen parallel zur Haupterstreckungsebene des Verpackungsmaterials und/oder zur Niederhalterfläche erstreckenden Ebene. Die Querrichtung verläuft vorzugsweise quer, insbesondere zumindest im Wesentlichen senkrecht, zur Förderrichtung. Durch die erfindungsgemäße Ausgestaltung kann vorteilhaft ein Nachfließen von Verpackungsmaterial während eines Umformens gewährleistet werden und zugleich kann einer Verschiebung oder einem Versetzen des Zuschnitts relativ zum übrigen Verpackungsmaterial, das nicht umgeformt werden soll, vorteilhaft entgegengewirkt werden. Es kann vorteilhaft ermöglicht werden, dass durch die Einschnitte geschwächte Bereiche, insbesondere Zuschnitte, des Verpackungsmaterials in einer Haupterstreckungsebene des Verpackungsmaterials angeordnet bleiben und insbesondere sich nicht nach oben oder unten verformen, da sie nach wie vor mit der Verpackungsmaterialbahn verbunden sind. Es kann vorteilhaft bei einem beschichteten Verpackungsmaterial gezielt eine Schicht, insbesondere eine Barriereschicht, eine Polymerschicht o. dgl., des Verpackungsmaterials durchtrennt werden, die einen großen Widerstand gegen Reißen aufweist, um insbesondere eine präzise Umformung zu ermöglichen. Es kann auch gezielt nur eine Papierschicht des Verpackungsmaterials durchtrennt werden, ohne dass die Barriereschicht, die Polymerschicht o. dgl., durchtrennt wird, um eine vorteilhafte Verbindung des Zuschnitts mit der Verpackungsmaterialbahn beizubehalten, während der Zuschnitt beim Umformen in eine Kavität gezogen wird.

Die erfindungsgemäße Niederhaltervorrichtung, die erfindungsgemäße Produktionsmaschine und/oder das erfindungsgemäße Verfahren sollen/soll hierbei nicht auf die oben beschriebene Anwendung und Ausführungsform beschränkt sein. Insbesondere können/kann die erfindungsgemäße Niederhaltervorrichtung, die erfindungsgemäße Produktionsmaschine und/oder das erfindungsgemäße Verfahren zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination.

Es zeigen:
- Fig. 1: Eine erfindungsgemäße Produktionsmaschine zu einer Verarbeitung von Verpackungsmaterial, insbesondere zumindest zu einer Herstellung von Verpackungen aus dem Verpackungsmaterial, in einer schematischen Darstellung,
- Fig. 2: eine Schnittansicht einer Umformvorrichtung der erfindungsgemäßen Produktionsmaschine mit einer daran angeordneten erfindungsgemäßen Niederhaltervorrichtung in einer schematischen Darstellung,
- Fig. 3a: eine Detailansicht eines Niederhalterelements mit einem daran angeordneten Schneidelement einer Schneidvorrichtung der erfindungsgemäßen Niederhaltervorrichtung in einer schematischen Darstellung,
- Fig. 3b: eine Detailansicht eines weiteren Niederhalterelements mit einem daran angeordneten Gegenschneidelement der Schneidvorrichtung der erfindungsgemäßen Niederhaltervorrichtung in einer schematischen Darstellung,
- Fig. 4: eine Detailansicht eines Niederhalterelements mit einem daran angeordneten Schneidelement einer Schneidvorrichtung einer alternativen erfindungsgemäßen Niederhaltervorrichtung in einer schematischen Darstellung,
- Fig. 5a - 5d: Detailansichten von Bahnabschnitten aus Verpackungsmaterial, in das im Bereich von Zuschnitten, die zu einer Umformung mittels einer Umformvorrichtung einer erfindungsgemäßen Produktionsmaschine vorgesehen sind, Schwächungen mittels unterschiedlicher Ausgestaltungen der erfindungsgemäßen Niederhaltervorrichtung eingebracht sind, in einer schematischen Darstellung,
- Fig. 6a - 6d: Detailansichten von alternativen Bahnabschnitten aus Verpackungsmaterial, in das im Bereich von Zuschnitten, die zu einer Umformung mittels einer Umformvorrichtung einer erfindungsgemäßen Produktionsmaschine vorgesehen sind, Schwächungen mittels unterschiedlicher Ausgestaltungen der erfindungsgemäßen Niederhaltervorrichtung eingebracht sind, in einer schematischen Darstellung und
- Fig. 7: einen schematischen Verfahrensablauf eines erfindungsgemäßen Verfahrens zu einer Umformung von Verpackungsmaterial, insbesondere Faserwerkstoff umfassendes Verpackungsmaterial.

### Beschreibung der Ausführungsbeispiele

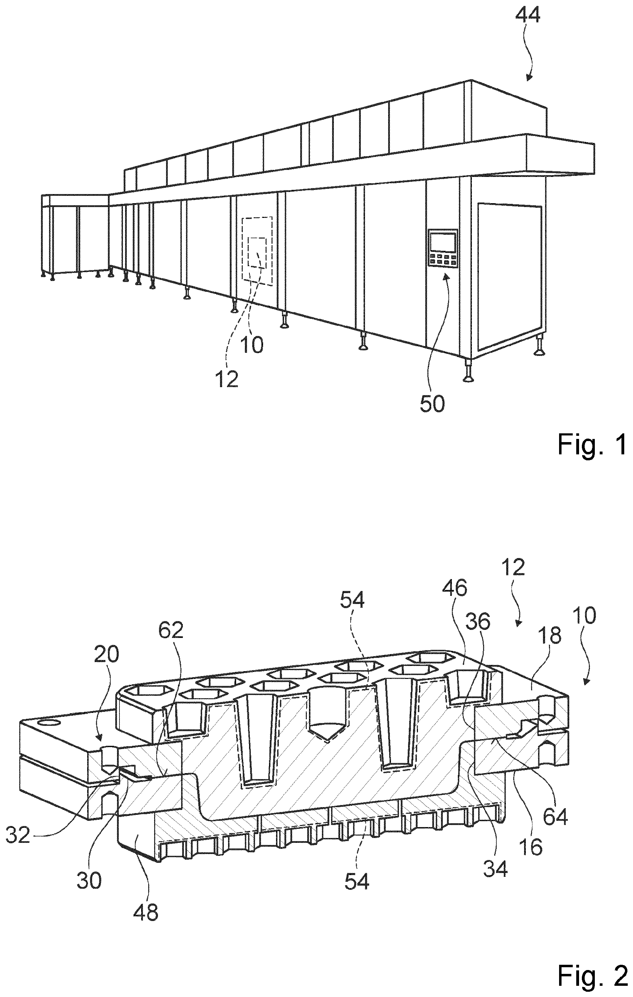

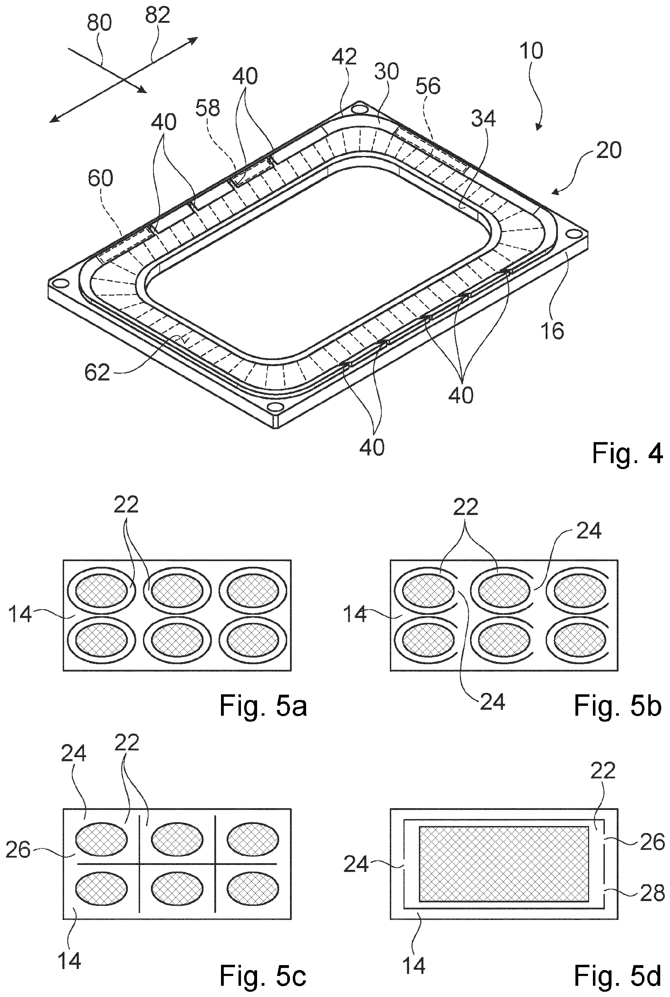

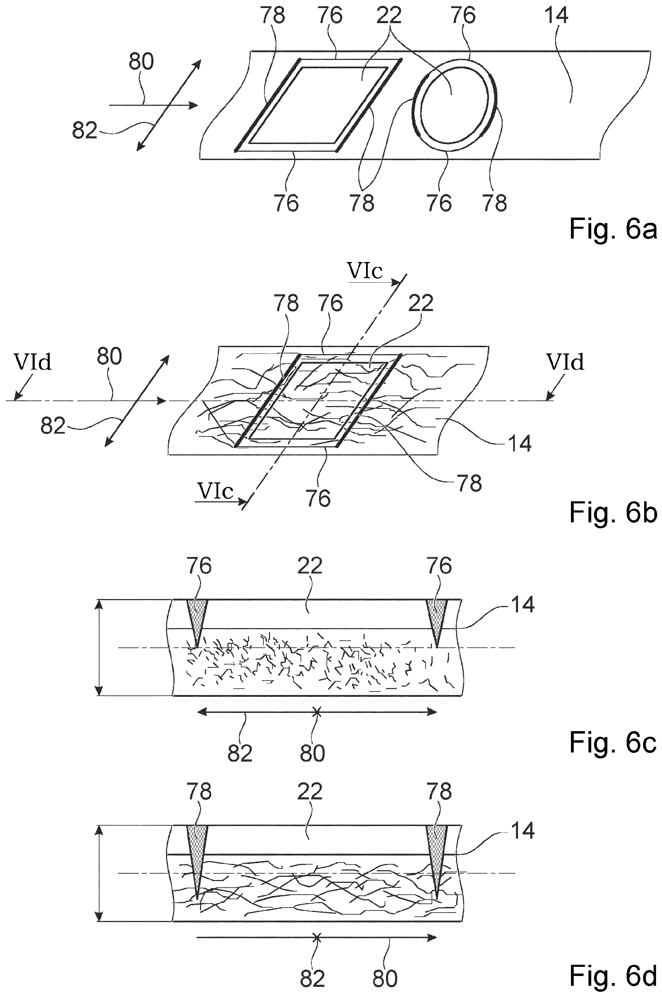

Figur 1 zeigt eine Produktionsmaschine 44 zu einer Verarbeitung von Verpackungsmaterial 14 (vgl. Figuren 5a bis 5d und 6a bis 6d), insbesondere Faserwerkstoff umfassendes Verpackungsmaterial 14. Die Produktionsmaschine 44 kann beispielsweise als eine Verpackungsproduktionsmaschine, als eine Lebensmittelverpackungsmaschine, als eine Lebensmittelabfüllmaschine, als eine Kombination der zuvor genannten Maschinen o. dgl. ausgebildet sein. Die Produktionsmaschine 44 umfasst zumindest eine, insbesondere zumindest einen Stempel 46 und eine Matrize 48 aufweisende, Umformvorrichtung 12 und zumindest eine an der Umformvorrichtung 12 angeordnete Niederhaltervorrichtung 10 (vgl. Figur 2). Die Umformvorrichtung 12 ist, insbesondere auf eine, einem Fachmann bereits bekannte Art und Weise, zu einer Herstellung von dreidimensionalen Formkörpern (hier nicht näher dargestellt), insbesondere Lebensmittelverpackungsbehältnisse oder Lebensmittelaufnahmebehältnisse, aus dem Verpackungsmaterial 14, wie beispielsweise Becher, Schalen o. dgl., vorgesehen. Vorzugsweise ist das Verpackungsmaterial 14 ein Papierverpackungsmaterial. Das Verpackungsmaterial 14 basiert auf, insbesondere natürlichem, Fasermaterial. Bevorzugt bildet Papier ein Grundmaterial des Verpackungsmaterials 14. Es ist jedoch auch denkbar, dass das Verpackungsmaterial 14 als Kartonverpackungsmaterial, als Pappverpackungsmaterial, als Papiervliesverpackungsmaterial oder als anderes, einem Fachmann als sinnvoll erscheinendes auf Fasermaterial basierendes Verpackungsmaterial 14 ausgebildet ist. Das Verpackungsmaterial 14 kann einlagig oder mehrlagig ausgebildet sein. Das Verpackungsmaterial 14 kann eine oder mehrere Funktionsschichten aufweisen, wie beispielsweise eine Barriereschicht, insbesondere eine Polymerschicht, o. dgl., die aus einem anderen Werkstoff als Papier oder Papier gebildet ist oder sind (vgl. Figuren 6c und 6d). Die Umformvorrichtung 12 ist, insbesondere auf eine, einem Fachmann bereits bekannte Art und Weise, zu einer Herstellung von dreidimensionalen Papier- oder Kartonformkörpern vorgesehen. Die Produktionsmaschine 44 kann weitere, einem Fachmann als sinnvoll erscheinende Vorrichtungen und/oder Einheiten aufweisen, die zu einer Herstellung und/oder Weiterverarbeitung von dreidimensionalen Formkörpern aus dem Verpackungsmaterial 14 Verwendung finden, wie beispielsweise zumindest eine Transportvorrichtung (hier nicht näher dargestellt), mittels derer das Verpackungsmaterial 14 während einer Herstellung und/oder Weiterverarbeitung entlang einer Förderrichtung 80 der Produktionsmaschine 44 (vgl. beispielsweise Figur 6a) bewegbar ist, eine Sterilisationsvorrichtung, eine Abfüllvorrichtung, eine Verschlussvorrichtung, eine Umverpackungsvorrichtung o. dgl. Die Transportvorrichtung kann als Rollentransportvorrichtung, als Bandtransportvorrichtung, als Kettentransportvorrichtung oder als eine andere, einem Fachmann als sinnvoll erscheinende Transportvorrichtung ausgebildet sein, die dazu vorgesehen ist, das Verpackungsmaterial 14 entlang der Förderrichtung 80 zu bewegen. Das Verpackungsmaterial 14, insbesondere die Verpackungspapierbahn, kann als aufgerollte Materialbahn, insbesondere als aufgerollte Papierbahn, ausgebildet sein, die dazu vorgesehen ist, in Form einer Rolle abgewickelt zu werden, um einem mittels der Produktionsmaschine 44 durchführbaren Herstellungsprozess oder Weiterverarbeitungsprozess zugeführt zu werden, oder das Verpackungsmaterial 14, insbesondere die Verpackungspapierbahn, kann als zugeschnittene Materialbahnabschnitte, insbesondere als zugeschnittene Papierbahnabschnitte, ausgebildet sein, die dazu vorgesehen sind, einzeln dem Herstellungsprozess oder dem Weiterverarbeitungsprozess zugeführt zu werden.

Figur 2 zeigt eine Schnittansicht der Umformvorrichtung 12, an der die Niederhaltervorrichtung 10 angeordnet ist, in einer schematischen Darstellung. Die Umformvorrichtung 12 umfasst vorzugsweise den Stempel 46 und die Matrize 48 zu einem, insbesondere dreidimensionalen, Umformen des Verpackungsmaterials 14, insbesondere zu einem Umformen eines mittels einer Schneidvorrichtung 20 der Niederhaltervorrichtung 10 erzeugten Zuschnitts 22 des Verpackungsmaterials 14, zu einem Formkörper, insbesondere zu einem Lebensmittelverpackungsbehältnis oder zu einem Lebensmittelaufnahmebehältnis. Der Stempel 46 und die Matrize 48 sind vorzugsweise relativ zueinander beweglich gelagert, insbesondere auf eine, einem Fachmann bereits bekannte Art und Weise. Die Umformvorrichtung 12 umfasst vorzugsweise eine Formheizeinheit 54, mittels derer Wärme während des Umformens in das Verpackungsmaterial 14, insbesondere den Zuschnitt 22, einbringbar ist. Die Formheizeinheit 54 weist Heizelemente (hier nicht näher dargestellt) auf, die auf eine, einem Fachmann bereits bekannte Art und Weise an dem Stempel 46 und/oder an der Matrize 48 angeordnet sind. Vorzugsweise weist die Umformvorrichtung 12 eine, einem Fachmann bereits bekannte Ausgestaltung und Funktionsweise auf, mittels derer ein einzelner Zuschnitt 22 oder eine Vielzahl an Zuschnitten 22 während eines einzelnen Hubs umformbar sind, insbesondere in Abhängigkeit von einer Anforderung an die herzustellende Art und Form des Formkörpers. Die Produktionsmaschine 44 umfasst vorzugsweise zumindest eine Steuer- oder Regeleinheit 50 (vgl. Figur 1), die dazu eingerichtet ist, zumindest einen Antrieb (hier nicht näher dargestellt) der Umformvorrichtung 12 auf eine, einem Fachmann bekannte Art und Weise zu steuern oder zu regeln. Bevorzugt ist der Stempel 46 mittels des Antriebs der Umformvorrichtung 12 relativ zur Matrize 48 beweglich antreibbar. Die Steuer- oder Regeleinheit 50 ist bevorzugt als elektronische Recheneinheit ausgebildet, die insbesondere auf eine, einem Fachmann bereits bekannte Art und Weise dazu eingerichtet ist, elektronische Signale zu einer Steuerung oder Regelung von elektronischen, mechanischen, hydraulischen und/oder pneumatischen Steuer- oder Regelelementen der Produktionsmaschine 44 zu senden, zu empfangen, zu übertragen und/oder zu generieren.

Die Niederhaltervorrichtung 10 für die Umformvorrichtung 12 umfasst zumindest ein Niederhalterelement 16 und zumindest ein weiteres Niederhalterelement 18, die relativ zueinander beweglich gelagert sind und zu einem Halten des Verpackungsmaterials 14 während eines Umformvorgangs vorgesehen sind. Ferner umfasst die Niederhaltervorrichtung 10 zumindest die Schneidvorrichtung 20, die, insbesondere vor einem Umformen des Verpackungsmaterials 14, dazu vorgesehen ist, das Verpackungsmaterial 14 zumindest stellenweise zu durchtrennen und/oder zumindest stellenweise einzuschneiden. Die Niederhaltervorrichtung 10 ist vorzugsweise an der Umformvorrichtung 12 angeordnet, insbesondere an der Matrize 48. Bevorzugt ist die Niederhaltervorrichtung 10 zumindest teilweise beweglich relativ zur Matrize 48 gelagert. Es ist denkbar, dass lediglich das Niederhalterelement 16 beweglich gelagert ist und das weitere Niederhalterelement 18 ortsfest ist, dass das Niederhalterelement 16 und das weitere Niederhalterelement 18 beweglich gelagert sind oder dass das weitere Niederhalterelement 18 beweglich gelagert ist und das Niederhalterelement 16 ortsfest ist. Insbesondere ist das Niederhalterelement 16 relativ zur Matrize 48 beweglich gelagert. Das weitere Niederhalterelement 18 ist vorzugsweise, insbesondere positionsfest, an der Matrize 48 angeordnet. Es ist jedoch auch denkbar, dass das weitere Niederhalterelement 18 relativ zur Matrize 48 beweglich gelagert ist und das Niederhalterelement 16, insbesondere positionsfest, an der Matrize 48 angeordnet ist. Der Stempel 46 ist bevorzugt relativ zur Niederhaltervorrichtung 10 und relativ zur Matrize 48 beweglich gelagert, insbesondere auf eine, einem Fachmann bereits bekannte Art und Weise.

Die Schneidvorrichtung 20 ist derart an dem Niederhalterelement 16 und/oder an dem weiteren Niederhalterelement 18 angeordnet, dass die Schneidvorrichtung 20 zumindest im Wesentlichen synchron zu einer Relativbewegung des Niederhalterelements 16 und des weiteren Niederhalterelements 18 beweglich ist, insbesondere bewegt wird. Vorzugsweise ist die Schneidvorrichtung 20 derart an dem Niederhalterelement 16 und/oder an dem weiteren Niederhalterelement 18 angeordnet, dass die Schneidvorrichtung 20 zumindest im Wesentlichen synchron zu einer Relativbewegung des Niederhalterelements 16 und des weiteren Niederhalterelements 18 beweglich ist, insbesondere bewegt wird. Die zumindest im Wesentlichen synchrone, insbesondere vollständig synchrone, Bewegung der Schneidvorrichtung 20 mit der Relativbewegung des Niederhalterelements 16 und des weiteren Niederhalterelements 18 kann dadurch erfolgen, dass die Schneidvorrichtung 20 zumindest teilweise an dem Niederhalterelement 16 und/oder zumindest teilweise an dem weiteren Niederhalterelement 18 fixiert ist und entsprechend zusammen mit dem Niederhalterelement 16 und/oder dem weiteren Niederhalterelement 18 beweglich ist, insbesondere bewegt wird, oder, insbesondere alternativ oder zusätzlich, dadurch dass ein Antrieb (hier nicht näher dargestellt) der Niederhaltervorrichtung 10 zur Bewegung der Schneidvorrichtung 20 derart steuerbar oder regelbar ist, insbesondere derart gesteuert oder geregelt wird, dass eine Bewegung der Schneidvorrichtung 20 mit einer Relativbewegung des Niederhalterelements 16 und des weiteren Niederhalterelements 18 zumindest im Wesentlichen synchron, insbesondere vollständig synchron, erfolgt. Bevorzugt ist die Steuer- oder Regeleinheit 50 der Produktionsmaschine 44 dazu eingerichtet, eine zumindest im Wesentlichen synchrone Bewegung des Niederhalterelements 16 und eines Schneidelements 30 der Schneidvorrichtung 20 und/oder eine zumindest im Wesentlichen synchrone Bewegung des weiteren Niederhalterelements 18 und eines Gegenschneidelements 32 der Schneidvorrichtung 20 zu steuern oder zu regeln, insbesondere in der alternativen oder zusätzlichen Ausgestaltung der Niederhaltervorrichtung 10.

Bevorzugt weist die Schneidvorrichtung 20 zumindest ein Schneidelement 30 und zumindest ein Gegenschneidelement 32 auf, wobei das Schneidelement 30 am Niederhalterelement 16 fixiert ist und das Gegenschneidelement 32 am weiteren Niederhalterelement 18 fixiert ist (vgl. Figuren 2, 3a, 3b und 4). Das Schneidelement 30 und/oder das Gegenschneidelement 32 können/kann eine einzelne Schneidkante 42 aufweisen, insbesondere bilden, oder das Schneidelement 30 und/oder das Gegenschneidelement 32 können/kann eine Vielzahl von Schneidkanten 42, die beispielsweise durch Unterbrechungen, insbesondere Nuten o. dgl., voneinander beabstandet sind, aufweisen. Die Schneidkante/n 42 kann/können jegliche/n, einem Fachmann als sinnvoll erachtete/ Schliff/e und/oder Formen aufweisen, wie beispielsweise einen Wellenschliff, einen Scandischliff, einen Flachschliff, einen balligen Anschliff, einen einseitigen Anschliff, einen Hohlschliff o. dgl., insbesondere in Abhängigkeit von einer Anwendung oder einem gewünschten Durchtrennschnitt/Einschnitt 76, 78. Vorzugsweise sind das Schneidelement 30 und das Gegenschneidelement 32 dazu vorgesehen, das Verpackungsmaterial 14 zumindest entlang einer Kontaktlinie oder einer Kontaktfläche zwischen der Schneidvorrichtung 20 und dem Verpackungsmaterial 14 zumindest stellenweise vollständig zu durchtrennen, insbesondere durch ein Abscheren. Das Schneidelement 30 und das Gegenschneidelement 32 wirken beispielsweise wie Schneidkanten einer Schere miteinander zusammen. Es ist jedoch auch denkbar, dass das Schneidelement 30 und das Gegenschneidelement 32 auf eine andere, einem Fachmann als sinnvoll erscheinenden Weise zusammenwirken, um das Verpackungsmaterial 14 gezielt an gewünschten Stellen zu schwächen, insbesondere zu durchtrennen, einzuschneiden, zu prägen, zu perforieren o. dgl. Beispielsweise ist infolge eines Zusammenwirkens des Schneidelements 30 und des Gegenschneidelements 32 zumindest entlang einer Kontaktlinie oder einer Kontaktfläche zwischen der Schneidvorrichtung 20 und dem Verpackungsmaterial 14 eine Perforation in das Verpackungsmaterial 14 einbringbar, eine ungleichmäßig verteilte Anordnung von Schnitten durch die gesamte Materialstärke des Verpackungsmaterials 14 in das Verpackungsmaterial 14 einbringbar, wobei insbesondere stellenweise Verbindungsabschnitte 24, 26, 28, wie beispielsweise Stege o. dgl. (vgl. insbesondere Figur 5b und 5d), zwischen den Schnitten erhalten bleiben, o. dgl. Es ist alternativ oder zusätzlich denkbar, dass das Schneidelement 30 und das Gegenschneidelement 32 dazu vorgesehen sind, das Verpackungsmaterial 14 zumindest entlang einer Kontaktlinie oder einer Kontaktfläche zwischen der Schneidvorrichtung 20 und dem Verpackungsmaterial 14 lediglich partiell zu durchtrennen, insbesondere einzuschneiden, oder zu prägen (vgl. insbesondere Figur 5a). Beispielsweise ist denkbar, dass das Schneidelement 30, insbesondere die Schneidkante 42, zumindest entlang einer Kontaktlinie oder einer Kontaktfläche zwischen der Schneidvorrichtung 20 und dem Verpackungsmaterial 14 lediglich partiell in das Verpackungsmaterial 14 eindringt und lediglich einzelne Schichten des Verpackungsmaterials 14 durchtrennt werden, insbesondere nicht durch die gesamte Materialstärke des Verpackungsmaterials 14 geschnitten wird (vgl. beispielsweise Figuren 6c und 6d).

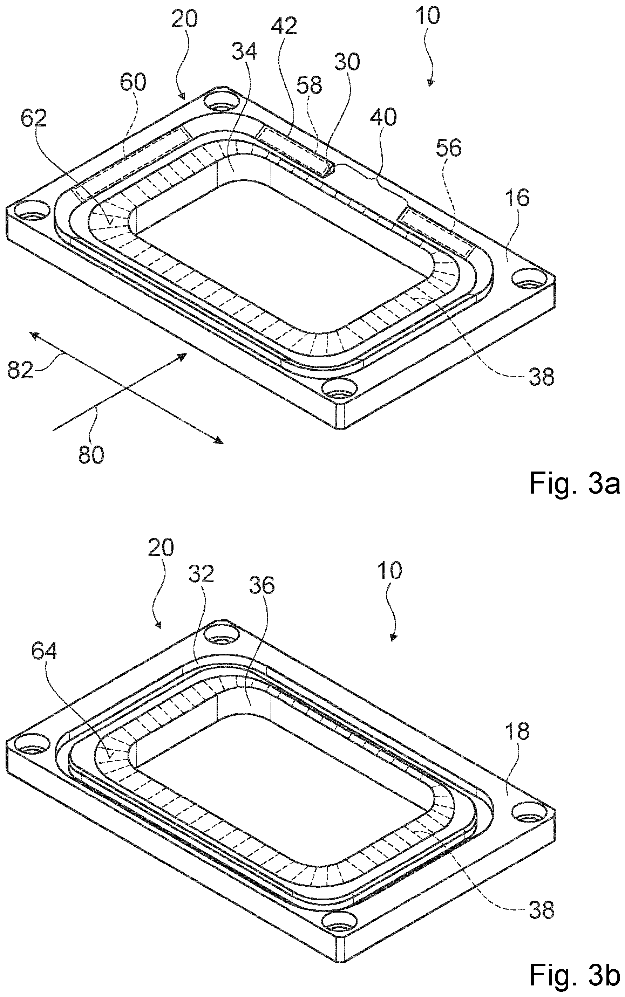

Die Schneidvorrichtung 20 weist vorzugsweise zumindest das Schneidelement 30 und zumindest das Gegenschneidelement 32 auf, wobei das Schneidelement 30 am Niederhalterelement 16 fixiert ist und sich zumindest größtenteils um eine Durchführöffnung 34 des Niederhalterelements 16 herum erstreckt (vgl. Figuren 3a und 4). Das Gegenschneidelement 32 ist bevorzugt am weiteren Niederhalterelement 18 fixiert und erstreckt sich zumindest größtenteils um eine Durchführöffnung 36 des weiteren Niederhalterelements 18 herum (vgl. Figur 3b). Das Schneidelement 30 kann mittels einer stoff-, kraft- und/oder formschlüssigen Verbindung an dem Niederhalterelement 16 fixiert sein, wie beispielsweise mittels einer Schraubverbindung, einer Klemmverbindung, einer Nietverbindung, einer Schweißverbindung o. dgl. Es ist denkbar, dass das Schneidelement 30, insbesondere in einer alternativen Ausgestaltung der Niederhaltervorrichtung 10, austauschbar, insbesondere zerstörungsfrei trennbar, an dem Niederhalterelement 16 fixiert ist. Das Schneidelement 30 kann als Ganzes von dem Niederhalterelement 16 austauschbar sein oder das Schneidelement 30 kann einzeln lösbare Schneidsegmente 56, 58, 60 (in Figuren 3a und 4 beispielhaft durch die Unterteilung des Schneidelements 30 gestrichelt angedeutet) aufweisen, die zusammen das Schneidelement 30 bilden und individuell, insbesondere einzeln, von dem Niederhalterelement 16 trennbar sind, insbesondere einzeln an dem Niederhalterelement 16 fixiert sind. Beispielsweise kann ein einzelnes der Schneidsegmente 56, 58, 60 oder eine Vielzahl an Schneidsegmenten 56, 58, 60 in Abhängigkeit von einer Anforderung an einen einzubringenden Schnitt oder Einschnitt 76, 78 individuell, insbesondere einzeln, vom Niederhalterelement 16 gelöst werden und von diesem abgenommen werden. Es kann vorteilhaft konstruktiv einfach eine Anpassung des Schnitt-, Präge- oder Durchtrennschnittverlaufs am Verpackungsmaterial 14 realisiert werden. Es ist jedoch auch denkbar, dass das Schneidelement 30 unlösbar an dem Niederhalterelement 16 fixiert ist, wie beispielsweise durch eine Schweißverbindung oder durch eine Kombination einer Schweißverbindung und einer form- und/oder stoffschlüssigen Verbindung, wie beispielsweise durch eine verschweißte Schraubverbindung, durch eine verschweißte Nietverbindung o. dgl. Es ist auch denkbar, dass das Schneidelement 30 aus einzelnen Schneidsegmenten 56, 58, 60 gebildet wird, wobei zumindest eines oder mehrere der Schneidsegmente 56, 58, 60 am Niederhalterelement 16 angeordnet ist oder sind und eines oder mehrere der Schneidsegmente 56, 58, 60 am weiteren Niederhalterelement 18 angeordnet ist oder sind. Weitere, einem Fachmann als sinnvoll erscheinende Anordnungen der Schneidsegmente 56, 58, 60 oder Ausgestaltungen des Schneidelements 30 sind ebenfalls denkbar.

Das Gegenschneidelement 32 kann mittels einer stoff-, kraft- und/oder formschlüssigen Verbindung an dem weiteren Niederhalterelement 18 fixiert sein, wie beispielsweise mittels einer Schraubverbindung, einer Klemmverbindung, einer Nietverbindung, einer Schweißverbindung o. dgl. Bevorzugt ist das Gegenschneidelement 32 unlösbar an dem weiteren Niederhalterelement 18 fixiert, wie beispielsweise durch eine Schweißverbindung oder durch eine Kombination einer Schweißverbindung und einer form- und/oder stoffschlüssigen Verbindung, wie beispielsweise durch eine verschweißte Schraubverbindung, durch eine verschweißte Nietverbindung o. dgl. Es ist auch denkbar, dass das Gegenschneidelement 32 aus einzelnen Gegenschneidsegmenten gebildet wird, wobei zumindest eines oder mehrere der Gegenschneidsegmente am weiteren Niederhalterelement 18 angeordnet ist oder sind und eines oder mehrere der Gegenschneidsegmente am Niederhalterelement 16 angeordnet ist oder sind, insbesondere in Abhängigkeit von einer Anordnung von einzelnen Schneidsegmenten 56, 58, 60 des Schneidelements 30 am Niederhalterelement 16 und/oder am weiteren Niederhalterelement 18. Bei den in den Figuren 3a, 3b und 4 dargestellten Ausführungsbeispielen ist das Schneidelement 30 einteilig mit dem Niederhalterelement 16 ausgebildet und das Gegenschneidelement 32 ist einteilig mit dem weiteren Niederhalterelement 18 ausgebildet. Die in den Figuren 3a und 4 dargestellten Niederhalterelemente 16 unterscheiden sich grundsätzlich lediglich durch die Anordnung und/oder Ausgestaltung des Schneidelements 30 am jeweiligen Niederhalterelement 16. Grundsätzlich betrifft die hierin aufgeführte Beschreibung der Niederhalterelemente 16 somit beide Ausführungsbeispiele, wobei unterschieden in Bezug auf die Schneidelemente 30 ein konkreter Bezug zur entsprechenden Figur angegeben ist.

Das Schneidelement 30 erstreckt sich vorzugsweise über eine Niederhalterfläche 62 des Niederhalterelements 16 hinweg. Bevorzugt erstreckt sich das Schneidelement 30 entlang einer zumindest im Wesentlichen senkrechten Richtung über die Niederhalterfläche 62 hinweg, insbesondere in der Art eines Schneidfortsatzes. Das Gegenschneidelement 32 ist vorzugsweise als Nut ausgebildet, dessen Begrenzungsrand mit dem Schneidelement 30 zu einem Durchtrennen oder zu einem Einschneiden des Verpackungsmaterials 14 auf eine, einem Fachmann bereits bekannte Art und Weise zusammenwirkt. In einem geschlossenen Zustand der Niederhaltervorrichtung 10, in dem die Niederhalterfläche 62 des Niederhalterelements 16 und eine Niederhalterfläche 64 des weiteren Niederhalterelements 18 zu einem Halten des Verpackungsmaterials 14 zusammenwirken, erstreckt sich das Schneidelement 30 in das Gegenschneidelement 32 hinein. Bei einer Hineinbewegung des Schneidelements 30 in das Gegenschneidelement 32 wird das Verpackungsmaterial 14 auf eine, einem Fachmann bereits bekannte Art und Weise mittels eines Zusammenwirkens der Schneidkante 42 und des Begrenzungsrands zumindest stellenweise eingeschnitten oder durchtrennt, insbesondere abgeschert. Der Figur 2 kann beispielsweise dieses Zusammenwirken entnommen werden.

Es ist denkbar, dass das Schneidelement 30, insbesondere in einer alternativen Ausgestaltung der Niederhaltervorrichtung 10, zumindest ein Schneidsegment 56, 58 und zumindest ein weiteres Schneidsegment 60 umfasst, wobei das Schneidsegment 56, 58 eine maximale Höhe aufweist, die verschieden ist zu einer maximalen Höhe des weiteren Schneidsegments 60. Vorzugsweise verläuft die maximale Höhe des Schneidsegments 56, 58 und/oder die maximale Höhe des weiteren Schneidsegments 60 entlang einer sich zumindest im Wesentlichen senkrecht zur Niederhalterfläche 62 des Niederhalterelements 16 erstreckenden Richtung. Bevorzugt verläuft die maximale Höhe des Schneidsegments 56, 58 und/oder die maximale Höhe des weiteren Schneidsegments 60 entlang einer sich zumindest im Wesentlichen parallel zu einer Bewegungsrichtung des Niederhalterelements 16 relativ zum weiteren Niederhalterelement 18 verlaufenden Richtung. Bevorzugt ist die maximale Höhe des Schneidsegments 56, 58 größer als die maximale Höhe des weiteren Schneidsegments 60. Es ist jedoch auch denkbar, dass die maximale Höhe des Schneidsegments 56, 58 geringer ist als die maximale Höhe des weiteren Schneidsegments 60. Vorzugsweise entspricht die maximale Höhe des weiteren Schneidsegments 60 mehr als 25 %, bevorzugt mehr als 50 % und ganz besonders bevorzugt weniger als 90 % der maximalen Höhe des Schneidsegments 56, 58. Bevorzugt ist das Schneidelement 30 bei einer Ausgestaltung mit unterschiedlich hohen Schneidsegmenten 56, 58, 60 zu einem Einschneiden des Verpackungsmaterials 14 vorgesehen, insbesondere zu einem nicht vollständigen Durchtrennen des Verpackungsmaterials 14 vorgesehen (vgl. beispielsweise Figuren 6c und 6d, in denen mittels der Schneidsegmente 56, 58, 60 in das Verpackungsmaterial 14 Einschnitte 76, 78 mit unterschiedlichen maximalen Schnitttiefen dargestellt sind). Die maximale Höhe des Schneidsegments 56, 58 und/oder die maximale Höhe des weiteren Schneidsegments 60 entsprechen insbesondere weniger als 95 %, bevorzugt weniger als 90 % und besonders bevorzugt weniger als 80 % einer maximalen Materialstärke des Verpackungsmaterials 14 (vgl. beispielsweise Figuren 6c und 6d, in denen eine gestrichelte Mittelline eine 50 % Marke einer maximalen Materialstärke des Verpackungsmaterials 14 schematisch andeutet).

Die Niederhaltervorrichtung 10 kann zumindest eine, insbesondere eine Vielzahl an Nuten und/oder an Stegen umfassende, Oberflächenstruktureinheit 38 (in Figuren 3a und 3b gestrichelt angedeutet) aufweisen, die zumindest zwischen der Durchführöffnung 34 des Niederhalterelements 16 und des am Niederhalterelement 16 angeordneten Schneidelements 30 der Schneidvorrichtung 20 und/oder zwischen der Durchführöffnung 36 des weiteren Niederhalterelements 18 und des am weiteren Niederhalterelement 18 angeordneten Gegenschneidelements 32 der Schneidvorrichtung 20 angeordnet ist. Vorzugsweise ist die Oberflächenstruktureinheit 38 zumindest teilweise an der Niederhalterfläche 62 des Niederhalterelements 16 und/oder zumindest teilweise an der Niederhalterfläche 64 des weiteren Niederhalterelements 18 angeordnet, insbesondere von diesen gebildet. Die Oberflächenstruktureinheit 38 kann als Riffelung, als Raster oder als sonstige, einem Fachmann als sinnvoll erscheinende Oberflächenstruktur ausgebildet sein, die eine Steuerung oder Beeinflussung einer Faltenbildung bewirkt. Es ist auch denkbar, dass die Niederhaltervorrichtung 10 unabhängig von der Oberflächenstruktureinheit 38 ausgebildet ist, insbesondere ohne Oberflächenstruktureinheit 38 ausgebildet ist.

Figur 4 zeigt ein Ausführungsbeispiel des Niederhalterelements 16, bei dem die Schneidvorrichtung 20 derart ausgebildet ist, dass das Verpackungsmaterial 14 derart zumindest stellenweise durchtrennt wird und/oder zumindest stellenweise eingeschnitten wird, dass ein aus dem Verpackungsmaterial 14 erzeugbarer Zuschnitt 22, aus dem mittels der Umformvorrichtung 12 ein dreidimensionaler Formkörper, insbesondere ein Lebensmittelaufnahmebehältnis, herstellbar ist, über zumindest, insbesondere mehr als, zwei Verbindungsabschnitte 24, 26, 28, insbesondere Verbindungsstege, mit dem Verpackungsmaterial 14 verbunden ist. Die Schneidvorrichtung 20 weist zumindest das, insbesondere zumindest größtenteils um die Durchführöffnung 34 umlaufend angeordnete, Schneidelement 30 und eine Vielzahl an schneidfreien Bereichen 40 auf, wobei die schneidfreien Bereiche 40, insbesondere zu einer Unterteilung der Schneidkante 42 des Schneidelements 30, unregelmäßig verteilt am Schneidelement 30 angeordnet sind.

Figuren 5a bis 5d zeigen mögliche Schwächungen des Verpackungsmaterials 14 mit der Niederhaltervorrichtung 10, wobei je nach Anwendung die Schneidvorrichtung 20 entsprechend der einzubringenden Schwächungen ausgebildet ist. In Figur 5a sind beispielsweise vollständig um den Zuschnitt 22 oder die Zuschnitte 22 verlaufende Prägungen oder Einschnitte 76, 78, die nicht vollständig durch die Materialstärke des Verpackungsmaterials 14 hindurchgehen, dargestellt. In Figur 5b sind beispielsweise Schwächungen in Form von nicht vollständig um den Zuschnitt 22 oder die Zuschnitte 22 verlaufende Trennschnitte dargestellt, so dass der Zuschnitt 22 oder die Zuschnitte 22 über zumindest einen Verbindungsabschnitt 24 noch mit dem Verpackungsmaterial 14 verbunden ist oder sind. Dies ist beispielsweise mittels eines Schneidelements 30, wie dies in Figur 3a dargestellt ist, realisierbar. In Figur 5c sind Schwächungen in Form von rasterförmigen oder quer zueinander verlaufenden Trennschnitten dargestellt, wobei der Zuschnitt 22 oder die Zuschnitte 22 über zumindest zwei Verbindungsabschnitte 24, 26 noch mit dem Verpackungsmaterial 14 verbunden ist oder sind. In Figur 5d sind beispielsweise Schwächungen in Form von nicht vollständig um den Zuschnitt 22 oder die Zuschnitte 22 verlaufende Trennschnitte dargestellt, so dass der Zuschnitt 22 oder die Zuschnitte 22 über zumindest drei Verbindungsabschnitte 24, 26, 28 noch mit dem Verpackungsmaterial 14 verbunden ist oder sind. Dies ist, insbesondere bis auf eine genaue Anordnung der schneidfreien Bereiche 40 und eine geometrische Form, beispielsweise mittels eines Schneidelements 30, wie dies in Figur 4 dargestellt ist, realisierbar, das mehrere schneidfreie Bereiche 40 aufweist, sich jedoch ansonsten größtenteils, um die Durchführöffnung 34 des Niederhalterelements 16 herum erstreckt.

Figuren 6a bis 6d zeigen mögliche Schwächungen des Verpackungsmaterials 14 mit der Niederhaltervorrichtung 10, wobei je nach Anwendung die Schneidvorrichtung 20 entsprechend der einzubringenden Schwächungen ausgebildet ist. Die Schwächungen sind in den Figuren 6a bis 6d vorzugsweise durch nicht vollständig durch die maximale Materialstärke des Verpackungsmaterials 14 reichende Einschnitte 76, 78 gebildet, die insbesondere durch die Schneidsegmente 56, 58, 60 mit unterschiedlichen maximalen Höhen in das Verpackungsmaterial 14 einbringbar sind. In Figur 6a ist ein Teilabschnitt einer Verpackungsmaterialbahn des Verpackungsmaterials 14 schematisch mit darin beispielsweise eingebrachten Einschnitten 76, 78 zur Bildung von Zuschnitten 22 dargestellt. Einschnitte 76, die sich größtenteils entlang einer Faserrichtung des Verpackungsmaterials 14 und/oder entlang der Förderrichtung 80 der Produktionsmaschine 44 erstrecken, sind in den Figuren 6a und 6b mit dünnen Linien dargestellt. Weitere Einschnitte 78, die sich größtenteils entlang einer quer, insbesondere zumindest im Wesentlichen senkrecht, zur Faserrichtung und/oder zur Förderrichtung 80 verlaufenden Querrichtung 82 erstrecken, sind in den Figuren 6a und 6b mit dicken Linien dargestellt. Die Einschnitte 76 sind vorzugsweise mittels den weiteren Schneidsegmenten 60 des Schneidelements 30, deren Schneidkanten 42 sich größtenteils zumindest im Wesentlichen parallel zur Förderrichtung 80 erstrecken, in das Verpackungsmaterial 14 einbringbar. Die weiteren Einschnitte 78 sind bevorzugt mittels den Schneidsegmenten 56, 58 des Schneidelements 30, deren Schneidkanten 42 sich größtenteils zumindest im Wesentlichen senkrecht zur Förderrichtung 80 erstrecken, in das Verpackungsmaterial 14 einbringbar. In den Figuren 6b bis 6d sind schematisch Fasern des Verpackungsmaterials 14 dargestellt, insbesondere um eine Veranschaulichung einer Ausrichtung der Faserrichtung zu ermöglichen. In Figur 6c ist eine Schnittansicht entlang der Linie VIc - VIc aus Figur 6b dargestellt, wobei eine Schnittebene vorzugsweise zumindest im Wesentlichen senkrecht zur Faserrichtung und/oder zur Förderrichtung 80 verläuft. In Figur 6d ist eine Schnittansicht entlang der Linie VId - Vld aus Figur 6b dargestellt, wobei eine Schnittebene vorzugsweise zumindest im Wesentlichen parallel zur Faserrichtung und/oder zur Förderrichtung 80 verläuft, insbesondere die Faserrichtung und/oder die Förderrichtung 80 enthält. In den Figuren 6c und 6d umfasst das Verpackungsmaterial 14 beispielhaft zwei Schichten, insbesondere eine Papierschicht (dicke Schicht) und eine Polymerschicht (dünne Schicht). Es ist jedoch auch denkbar, dass das Verpackungsmaterial 14 nur eine einzelne Schicht, insbesondere eine Papierschicht o. dgl., umfasst, wobei ein analoges Einbringen des Einschnitts 76 und des weiteren Einschnitts 78 erfolgen kann. Zudem ist auch denkbar, dass der Einschnitt 76 auf einer dem weiteren Einschnitt 78 abgewandten Seite des Verpackungsmaterials 14 in das Verpackungsmaterial 14 eingebracht wird, insbesondere in Abhängigkeit von einer Anordnung der Schneidsegmente 56, 58, 60 an dem Niederhalterelement 16 und/oder an dem weiteren Niederhalterelement 18.

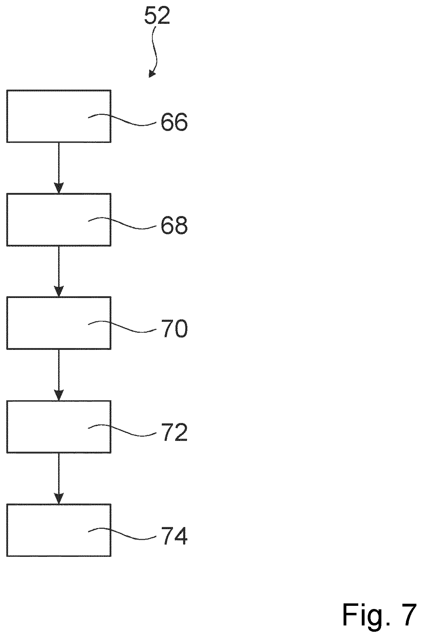

Figur 7 zeigt einen schematischen Verfahrensablauf eines Verfahrens 52 zu einer Umformung des Verpackungsmaterials 14 mittels der Umformvorrichtung 12, an der die Niederhaltervorrichtung 10 angeordnet ist. Vorzugsweise erfolgt in einem Verfahrensschritt 66 des Verfahrens 52 ein Zuführen des Verpackungsmaterials 14 zur Umformvorrichtung 12. In zumindest einem Verfahrensschritt 68 des Verfahrens 52 wird die Niederhaltervorrichtung 10 geschlossen. Bevorzugt werden zumindest das Niederhalterelement 16 und das Schneidelement 30 der Schneidvorrichtung 20 zumindest im Wesentlichen synchron bewegt, insbesondere bevor ein Umformen des Verpackungsmaterials 14 mit der Umformvorrichtung 12 erfolgt. Vorzugsweise wird das Verpackungsmaterial 14 durch ein Schließen der Niederhaltervorrichtung 10 zumindest stellenweise durchtrennt und/oder eingeschnitten, insbesondere bevor ein Umformen des Verpackungsmaterials 14 mit der Umformvorrichtung 12 erfolgt. Bevorzugt durchtrennt und/oder schneidet die Schneidvorrichtung 20 das Verpackungsmaterial 14 derart stellenweise ein, dass der/die aus dem Verpackungsmaterial 14 erzeugte/erzeugten Zuschnitt/e 22, aus dem mittels der Umformvorrichtung 12 ein dreidimensionaler Formkörper, insbesondere ein Lebensmittelaufnahmebehältnis, hergestellt wird, über zumindest, insbesondere mehr als, zwei Verbindungsabschnitte 24, 26, 28, insbesondere Verbindungsstege, mit dem Verpackungsmaterial 14 verbunden ist/sind. In zumindest einem Verfahrensschritt 70 des Verfahrens 52 wird die Umformvorrichtung 12 geschlossen, um aus dem/den Zuschnitt/en 22 ein oder mehrere Formkörper während eines Hubs des Stempels 46 herzustellen. In weiteren Verfahrensschritten 72, 74 des Verfahrens 52 kann eine Weiterverarbeitung des erzeugten Formkörpers erfolgen. Beispielsweise kann im Verfahrensschritt 72 eine Befüllung des Formkörpers mit Lebensmitteln erfolgen und im Verfahrensschritt 74 kann ein Verschluss des mit Lebensmitteln gefüllten Formkörpers erfolgen.

In einem bevorzugten Verfahrensablauf des Verfahrens 52 wird das Verpackungsmaterial 14, insbesondere zu einem Erzeugen des Zuschnitts 22, aus dem mittels der Umformvorrichtung 12 ein dreidimensionaler Formkörper, insbesondere ein Lebensmittelaufnahmebehältnis, herstellbar ist, zumindest stellenweise eingeschnitten, insbesondere nicht vollständig durchtrennt, wobei eine maximale Schnitttiefe von zumindest einem der Einschnitte 76, 78 abhängig ist von der Faserrichtung des Verpackungsmaterials 14 und/oder von der Förderrichtung 80. Bevorzugt weist der mittels des Schneidelements 30 in das Verpackungsmaterial 14 eingebrachte Einschnitt 76, der sich größtenteils entlang der Faserrichtung und/oder entlang der Förderrichtung 80 erstreckt, eine maximale Schnitttiefe auf, die, insbesondere in Bezug auf einen Zahlenwert, geringer, insbesondere kleiner, ist als eine maximale Schnitttiefe des mittels des Schneidelements 30 in das Verpackungsmaterial 14 eingebrachten weiteren Einschnitts 78, der sich größtenteils entlang einer quer, insbesondere zumindest im Wesentlichen senkrecht, zur Faserrichtung und/oder zur Förderrichtung 80 verlaufenden Querrichtung 82 erstreckt (vgl. Figuren 6c und 6d).

Weitere oder alternative Verfahrensschritte des Verfahrens 52, die einem Fachmann als sinnvoll erscheinen, kann das Verfahren 52 auch aufweisen. Hinsichtlich weiterer Merkmale des Verfahrens 52 wird grundsätzlich auf die Beschreibung der Figuren 1 bis 5d verwiesen, die analog auf das Verfahren 52 zu lesen sind.

## Patentansprüche

1. Niederhaltervorrichtung für eine Umformvorrichtung (12), die zu einer Herstellung von dreidimensionalen Formkörpern aus Verpackungsmaterial (14) vorgesehen ist, mit zumindest einem Niederhalterelement (16) und mit zumindest einem weiteren Niederhalterelement (18), die relativ zueinander beweglich gelagert sind und zu einem Halten des Verpackungsmaterials (14) während eines Umformvorgangs vorgesehen sind, sowie mit zumindest einer Schneidvorrichtung (20), die, insbesondere vor einem Umformen des Verpackungsmaterials (14), dazu vorgesehen ist, das Verpackungsmaterial (14) zumindest stellenweise zu durchtrennen und/oder zumindest stellenweise einzuschneiden, wobei die Schneidvorrichtung (20) derart an dem Niederhalterelement (16) und/oder an dem weiteren Niederhalterelement (18) angeordnet ist, dass die Schneidvorrichtung (20) zumindest im Wesentlichen synchron zu einer Relativbewegung des Niederhalterelements (16) und des weiteren Niederhalterelements (18) bewegbar ist, insbesondere bewegt wird, **dadurch gekennzeichnet, dass** die Schneidvorrichtung (20) zumindest ein, insbesondere zumindest größtenteils um eine Durchführöffnung (34) umlaufend angeordnetes, Schneidelement (30) umfasst, das zumindest ein Schneidsegment (56, 58) und zumindest ein weiteres Schneidsegment (60) umfasst, wobei das Schneidsegment (56, 58) eine maximale Höhe aufweist, die verschieden ist zu einer maximalen Höhe des weiteren Schneidsegments (60), um einen Einschnitt (76) in das Verpackungsmaterial (14) und einen weiteren Einschnitt (78) in das Verpackungsmaterial (14) einzubringen, wobei eine maximale Schnittiefe des Einschnitts (76) verschieden ist zu einer maximalen Schnitttiefe des weiteren Einschnitts (78).

2. Niederhaltervorrichtung nach Anspruch 1, **dadurch gekennzeichnet, dass** die Schneidvorrichtung (20) derart ausgebildet ist, dass das Verpackungsmaterial (14) derart zumindest stellenweise durchtrennt wird und/oder zumindest stellenweise eingeschnitten wird, dass ein aus dem Verpackungsmaterial (14) erzeugbarer Zuschnitt (22), aus dem mittels der Umformvorrichtung (12) ein dreidimensionaler Formkörper, insbesondere ein Lebensmittelaufnahmebehältnis, herstellbar ist, über zumindest, insbesondere mehr als, zwei Verbindungsabschnitte (24, 26, 28), insbesondere Verbindungsstege, mit dem Verpackungsmaterial (14) verbunden ist.

3. Niederhaltervorrichtung nach Anspruch 1 oder 2, **dadurch gekennzeichnet, dass** die Schneidvorrichtung (20) zumindest das Schneidelement (30) und zumindest ein Gegenschneidelement (32) aufweist, wobei das Schneidelement (30) am Niederhalterelement (16) fixiert ist und das Gegenschneidelement (32) am weiteren Niederhalterelement (18) fixiert ist.

4. Niederhaltervorrichtung nach einem der vorhergehenden Ansprüche, **dadurch gekennzeichnet, dass** die Schneidvorrichtung (20) zumindest das Schneidelement (30) und zumindest ein Gegenschneidelement (32) aufweist, wobei das Schneidelement (30) einteilig mit dem Niederhalterelement (16) ausgebildet ist und das Gegenschneidelement (32) einteilig mit dem weiteren Niederhalterelement (18) ausgebildet ist.

5. Niederhaltervorrichtung nach einem der vorhergehenden Ansprüche, **dadurch gekennzeichnet, dass** die Schneidvorrichtung (20) zumindest das Schneidelement (30) und zumindest ein Gegenschneidelement (32) aufweist, wobei das Schneidelement (30) am Niederhalterelement (16) fixiert ist und sich zumindest größtenteils um eine Durchführöffnung (34) des Niederhalterelements (16) herum erstreckt, und wobei das Gegenschneidelement (32) am weiteren Niederhalterelement (18) fixiert ist und sich zumindest größtenteils um eine Durchführöffnung (36) des weiteren Niederhalterelements (18) herum erstreckt.

6. Niederhaltervorrichtung nach einem der vorhergehenden Ansprüche, **gekennzeichnet durch** zumindest eine, insbesondere eine Vielzahl an Nuten und/oder an Stegen umfassende, Oberflächenstruktureinheit (38), die zumindest zwischen einer Durchführöffnung (34) des Niederhalterelements (16) und des am Niederhalterelement (16) angeordneten Schneidelements (30) der Schneidvorrichtung (20) und/oder zwischen einer Durchführöffnung (36) des weiteren Niederhalterelements (18) und eines am weiteren Niederhalterelement (18) angeordneten Gegenschneidelements (32) der Schneidvorrichtung (20) angeordnet ist.

7. Niederhaltervorrichtung nach einem der vorhergehenden Ansprüche **dadurch gekennzeichnet, dass** die Schneidvorrichtung (20) zumindest das, insbesondere zumindest größtenteils um eine Durchführöffnung (34) umlaufend angeordnete, Schneidelement (30) und eine Vielzahl an schneidfreien Bereichen (40) aufweist, wobei die schneidfreien Bereiche (40), insbesondere zu einer Unterteilung einer Schneidkante (42) des Schneidelements (30), unregelmäßig verteilt am Schneidelement (30) angeordnet sind.

8. Produktionsmaschine zu einer Verarbeitung von Verpackungsmaterial (14), insbesondere Faserwerkstoff umfassendes Verpackungsmaterial (14), mit zumindest einer, insbesondere zumindest einen Stempel (46) und eine Matrize (48) aufweisenden, Umformvorrichtung (12) und mit zumindest einer an der Umformvorrichtung (12) angeordneten Niederhaltervorrichtung nach einem der vorhergehenden Ansprüche.

9. Produktionsmaschine nach Anspruch 8, **gekennzeichnet durch** zumindest eine Steuer- oder Regeleinheit (50), die dazu eingerichtet ist, eine zumindest im Wesentlichen synchrone Bewegung des Niederhalterelements (16) und des Schneidelements (30) der Schneidvorrichtung (20) und/oder eine zumindest im Wesentlichen synchrone Bewegung des weiteren Niederhalterelements (18) und eines Gegenschneidelements (32) der Schneidvorrichtung (20) zu steuern oder zu regeln.

10. Verfahren zu einer Umformung von Verpackungsmaterial (14), insbesondere Faserwerkstoff umfassendes Verpackungsmaterial (14), mittels einer Umformvorrichtung (12), an der eine Niederhaltervorrichtung nach einem der Ansprüche 1 bis 7 angeordnet ist, wobei zumindest das Niederhalterelement (16) und das Schneidelement (30) der Schneidvorrichtung (20) zumindest im Wesentlichen synchron bewegt werden, insbesondere bevor ein Umformen des Verpackungsmaterials (14) mit der Umformvorrichtung (12) erfolgt, **dadurch gekennzeichnet, dass** mittels des zumindest einen Schneidsegments (56, 58) ein Einschnitt (76) in das Verpackungsmaterial (14) eingebracht wird und mittels des zumindest einen weiteren Schneidsegments (60) ein weiterer Einschnitt (78) in das Verpackungsmaterial (14) eingebracht wird, wobei eine maximale Schnitttiefe des Einschnitts (76) verschieden ist zu einer maximalen Schnitttiefe des weiteren Einschnitts (78).

11. Verfahren nach Anspruch 10, wobei das Verpackungsmaterial (14) durch ein Schließen der Niederhaltervorrichtung zumindest stellenweise durchtrennt wird und/oder eingeschnitten wird, insbesondere bevor ein Umformen des Verpackungsmaterials (14) mit der Umformvorrichtung (12) erfolgt.

12. Verfahren nach Anspruch 10 oder 11, wobei die Schneidvorrichtung (20) das Verpackungsmaterial (14) derart stellenweise durchtrennt und/oder zumindest stellenweise einschneidet, dass ein aus dem Verpackungsmaterial (14) erzeugter Zuschnitt (22), aus dem mittels der Umformvorrichtung (12) ein dreidimensionaler Formkörper, insbesondere ein Lebensmittelaufnahmebehältnis, hergestellt wird, über zumindest, insbesondere mehr als, zwei Verbindungsabschnitte (24, 26, 28), insbesondere Verbindungsstege, mit dem Verpackungsmaterial (14) verbunden ist.

13. Verfahren nach einem der Ansprüche 10 bis 12, wobei das Verpackungsmaterial (14) zumindest stellenweise eingeschnitten wird und eine maximale Schnitttiefe von zumindest einem Einschnitt (76, 78) abhängig ist von, insbesondere einer Ausrichtung zu, einer Faserrichtung des Verpackungsmaterials (14) und/oder von einer Förderrichtung (80) einer die Niederhaltervorrichtung umfassenden Produktionsmaschine.

14. Verfahren nach einem der Ansprüche 10 bis 13, wobei das Verpackungsmaterial (14) zumindest stellenweise eingeschnitten wird, wobei zumindest der sich größtenteils entlang einer Faserrichtung des Verpackungsmaterials (14) und/oder entlang einer Förderrichtung (80) einer die Niederhaltervorrichtung umfassenden Produktionsmaschine erstreckende Einschnitt (76) und zumindest der sich größtenteils entlang einer quer, insbesondere zumindest im Wesentlichen senkrecht, zur Faserrichtung und/oder zur Förderrichtung (80) verlaufenden Querrichtung (82) erstreckende weitere Einschnitt (78) in das Verpackungsmaterial (14) eingebracht wird.

## Claims

1. Hold-down device for a forming device (12) intended for producing three-dimensional shaped bodies from packaging material (14), comprising at least one hold-down element (16) and at least one further hold-down element (18), which are mounted so as to be movable relative to one another and are intended to hold the packaging material (14) during a forming process, and comprising at least one cutting device (20), which, in particular before forming the packaging material (14), is intended to cut through the packaging material (14) at least in places and/or cut into said material at least in places, the cutting device (20) being arranged on the hold-down element (16) and/or on the further hold-down element (18) such that the cutting device (20) is movable, in particular is moved, at least substantially synchronously with a relative movement of the hold-down element (16) and the further hold-down element (18), **characterized in that** the cutting device (20) comprises at least one cutting element (30), which is arranged in particular at least largely circumferentially around a through-opening (34), and which comprises at least one cutting segment (56, 58) and at least one further cutting segment (60), the cutting segment (56, 58) having a maximum height, which is different from a maximum height of the further cutting segment (60), in order to make an incision (76) in the packaging material (14) and a further incision (78) in the packaging material (14), a maximum cutting depth of the incision (76) being different from a maximum cutting depth of the further incision (78).

2. Hold-down device according to claim 1, **characterized in that** the cutting device (20) is designed such that the packaging material (14) is cut through at least in places and/or cut into at least in places such that a blank (22), which can be produced from the packaging material (14) and from which a three-dimensional shaped body, in particular a food receptacle, can be produced by means of the forming device (12), is connected to the packaging material (14) via at least, in particular more than, two connecting portions (24, 26, 28), in particular connecting pieces.

3. Hold-down device according to either claim 1 or claim 2,
**characterized in that** the cutting device (20) has at least the cutting element (30) and at least one counter-cutting element (32), the cutting element (30) being secured to the hold-down element (16) and the counter-cutting element (32) being secured to the further hold-down element (18).

4. Hold-down device according to any of the preceding claims, **characterized in that** the cutting device (20) has at least the cutting element (30) and at least one counter-cutting element (32), the cutting element (30) being formed in one piece with the hold-down element (16) and the counter-cutting element (32) being formed in one piece with the further hold-down element (18).

5. Hold-down device according to any of the preceding claims, **characterized in that** the cutting device (20) has at least the cutting element (30) and at least one counter-cutting element (32), the cutting element (30) being secured to the hold-down element (16) and extending at least largely around a through-opening (34) of the hold-down element (16), and the counter-cutting element (32) being secured to the further hold-down element (18) and extending at least largely around a through-opening (36) of the further hold-down element (18).

6. Hold-down device according to any of the preceding claims,
**characterized by** at least one surface structure unit (38), in particular comprising a plurality of grooves and/or ribs, which is arranged at least between a through-opening (34) of the hold-down element (16) and the cutting element (30) of the cutting device (20) arranged on the hold-down element (16) and/or between a through-opening (36) of the further hold-down element (18) and a counter-cutting element (32) of the cutting device (20) arranged on the further hold-down element (18).

7. Hold-down device according to any of the preceding claims **characterized in that** the cutting device (20) has at least the cutting element (30), which is arranged in particular at least largely circumferentially around a through-opening (34), and a plurality of cutting-free regions (40), the cutting-free regions (40) being arranged irregularly distributed on the cutting element (30), in particular for subdividing a cutting edge (42) of the cutting element (30).

8. Production machine for processing packaging material (14), in particular packaging material (14) comprising fiber material, comprising at least one forming device (12), in particular having at least one punch (46) and one die (48), and comprising at least one hold-down device according to any of the preceding claims arranged on the forming device (12).

9. Production machine according to claim 8, **characterized by** at least one open-loop or closed-loop control unit (50) which is designed to control by means of open-loop or closed-loop control an at least substantially synchronous movement of the hold-down element (16) and the cutting element (30) of the cutting device (20) and/or an at least substantially synchronous movement of the further hold-down element (18) and a counter-cutting element (32) of the cutting device (20).

10. Method for forming packaging material (14), in particular packaging material (14) comprising fiber material, by means of a forming device (12) on which a hold-down device according to any of claims 1 to 7 is arranged, at least the hold-down element (16) and the cutting element (30) of the cutting device (20) being moved at least substantially synchronously, in particular before forming the packaging material (14) with the forming device (12), **characterized in that** by means of the at least one cutting segment (56, 58) an incision (76) is made in the packaging material (14) and by means of the at least one further cutting segment (60) a further incision (78) is made in the packaging material (14), a maximum cutting depth of the incision (76) being different from a maximum cutting depth of the further incision (78).

11. Method according to claim 10, wherein the packaging material (14) is cut through and/or cut into at least in places by the hold-down device being closed, in particular before the packaging material (14) is formed with the forming device (12).

12. Method according to claim 10 or claim 11, wherein the cutting device (20) cuts through the packaging material (14) in places and/or cuts into said material at least in places such that a blank (22), which is produced from the packaging material (14) and from which a three-dimensional shaped body, in particular a food receptacle, is produced by means of the forming device (12), is connected to the packaging material (14) via at least, in particular more than, two connecting portions (24, 26, 28), in particular connecting pieces.

13. Method according to any of claims 10 to 12, wherein the packaging material (14) is cut into at least in places and a maximum cutting depth of at least one incision (76, 78) is dependent on a fiber direction of the packaging material (14) and/or on a conveying direction (80) of a production machine comprising the hold-down device, in particular is dependent on an orientation with respect to said direction.

14. Method according to any of claims 10 to 13, wherein the packaging material (14) is cut into at least in places, wherein at least the incision (76) extending largely along a fiber direction of the packaging material (14) and/or along a conveying direction (80) of a production machine comprising the hold-down device and at least the further incision (78) extending largely along a transverse direction (82) running transversely, in particular at least substantially perpendicularly, to the fiber direction and/or to the conveying direction (80) is made in the packaging material (14).

## Revendications

1. Dispositif de serre-flanc pour un dispositif de formage (12), qui est prévu pour une fabrication de corps moulés tridimensionnels à partir de matériau d'emballage (14), comportant au moins un élément de serre-flanc (16) et comportant au moins un autre élément de serre-flanc (18), qui sont montés mobiles l'un par rapport à l'autre et sont prévus pour un maintien du matériau d'emballage (14) pendant une opération de formage, ainsi que comportant au moins un dispositif de coupe (20) qui, en particulier avant un formage du matériau d'emballage (14), est prévu pour couper au moins par endroits le matériau d'emballage (14) et/ou pour l'entailler au moins par endroits, dans lequel le dispositif de coupe (20) est disposé de telle sorte sur l'élément de serre-flanc (16) et/ou sur l'autre élément de serre-flanc (18), que le dispositif de coupe (20) peut être déplacé, en particulier est déplacé, au moins sensiblement de manière synchrone par rapport à un mouvement relatif de l'élément de serre-flanc (16) et de l'autre élément de serre-flanc (18), **caractérisé en ce que** le dispositif de coupe (20) comprend au moins un élément de coupe (30), en particulier disposé au moins en grande partie autour d'une ouverture de passage (34), lequel élément de coupe comprend au moins un segment de coupe (56, 58) et au moins un autre segment de coupe (60), dans lequel le segment de coupe (56, 58) présente une hauteur maximale qui est différente d'une hauteur maximale de l'autre segment de coupe (60), pour pratiquer une entaille (76) dans le matériau d'emballage (14) et une autre entaille (78) dans le matériau d'emballage (14), dans lequel une profondeur de coupe maximale de l'entaille (76) est différente d'une profondeur de coupe maximale de l'autre entaille (78).

2. Dispositif de serre-flanc selon la revendication 1, **caractérisé en ce que** le dispositif de coupe (20) est réalisé de telle sorte que le matériau d'emballage (14) est coupé au moins par endroits et/ou est entaillé au moins par endroits de telle sorte qu'une découpe (22) pouvant être produite à partir du matériau d'emballage (14), à partir de laquelle un corps moulé tridimensionnel, en particulier un récipient de réception de denrées alimentaires, peut être fabriqué à l'aide du dispositif de formage (12), est reliée au matériau d'emballage (14) par au moins, en particulier plus de, deux sections de liaison (24, 26, 28), en particulier des barrettes de liaison.

3. Dispositif de serre-flanc selon la revendication 1 ou 2, **caractérisé en ce que** le dispositif de coupe (20) présente au moins l'élément de coupe (30) et au moins un contre-élément de coupe (32), dans lequel l'élément de coupe (30) est fixé à l'élément de serre-flanc (16) et le contre-élément de coupe (32) est fixé à l'autre élément de serre-flanc (18).

4. Dispositif de serre-flanc selon l'une des revendications précédentes, **caractérisé en ce que** le dispositif de coupe (20) présente au moins l'élément de coupe (30) et au moins un contre-élément de coupe (32), dans lequel l'élément de coupe (30) est réalisé d'une seule pièce avec l'élément de serre-flanc (16) et le contre-élément de coupe (32) est réalisé d'une seule pièce avec l'autre élément de serre-flanc (18).

5. Dispositif de serre-flanc selon l'une des revendications précédentes, **caractérisé en ce que** le dispositif de coupe (20) présente au moins l'élément de coupe (30) et au moins un contre-élément de coupe (32), dans lequel l'élément de coupe (30) est fixé à l'élément de serre-flanc (16) et s'étend au moins en grande partie autour d'une ouverture de passage (34) de l'élément de serre-flanc (16), et dans lequel le contre-élément de coupe (32) est fixé à l'autre élément de serre-flanc (18) et s'étend au moins en grande partie autour d'une ouverture de passage (36) de l'autre élément de serre-flanc (18).

6. Dispositif de serre-flanc selon l'une des revendications précédentes, **caractérisé par** au moins une unité de structure de surface (38), comprenant en particulier une pluralité de rainures et/ou de nervures, qui est disposée au moins entre une ouverture de passage (34) de l'élément de serre-flanc (16) et l'élément de coupe (30) du dispositif de coupe (20) disposé sur l'élément de serre-flanc (16) et/ou entre une ouverture de passage (36) de l'autre élément de serre-flanc (18) et un contre-élément de coupe (32) du dispositif de coupe (20) disposé sur l'autre élément de serre-flanc (18).

7. Dispositif de serre-flanc selon l'une des revendications précédentes, **caractérisé en ce que** le dispositif de coupe (20) présente au moins l'élément de coupe (30), disposé en particulier au moins en grande partie autour d'une ouverture de passage (34), et une pluralité de zones sans coupe (40), dans lequel les zones sans coupe (40) sont disposées réparties de manière irrégulière sur l'élément de coupe (30), en particulier pour une subdivision d'une arête de coupe (42) de l'élément de coupe (30).

8. Machine de production pour un traitement de matériau d'emballage (14), en particulier de matériau d'emballage (14) comprenant un matériau fibreux, comportant au moins un dispositif de formage (12) présentant en particulier au moins un poinçon (46) et une matrice (48), et comportant au moins un dispositif de serre-flanc selon l'une des revendications précédentes disposé sur le dispositif de formage (12).

9. Machine de production selon la revendication 8, **caractérisée par** au moins une unité de commande ou de régulation (50) qui est conçue pour commander ou réguler un mouvement au moins sensiblement synchrone de l'élément de serre-flanc (16) et de l'élément de coupe (30) du dispositif de coupe (20) et/ou un mouvement au moins sensiblement synchrone de l'autre élément de serre-flanc (18) et d'un contre-élément de coupe (32) du dispositif de coupe (20).

10. Procédé pour un formage de matériau d'emballage (14), en particulier de matériau d'emballage (14) comprenant un matériau fibreux, à l'aide d'un dispositif de formage (12) sur lequel est disposé un dispositif de serre-flanc selon l'une des revendications 1 à 7, dans lequel au moins l'élément de serre-flanc (16) et l'élément de coupe (30) du dispositif de coupe (20) sont déplacés au moins sensiblement de manière synchrone, en particulier avant qu'un formage du matériau d'emballage (14) ne soit effectué avec le dispositif de formage (12), **caractérisé en ce qu'**une entaille (76) est pratiquée dans le matériau d'emballage (14) à l'aide de l'au moins un segment de coupe (56, 58) et une autre entaille (78) est pratiquée dans le matériau d'emballage (14) à l'aide de l'au moins un autre segment de coupe (60), dans lequel une profondeur de coupe maximale de l'entaille (76) est différente d'une profondeur de coupe maximale de l'autre entaille (78).

11. Procédé selon la revendication 10, dans lequel le matériau d'emballage (14) est coupé et/ou entaillé au moins par endroits par une fermeture du dispositif de serre-flanc, en particulier avant qu'un formage du matériau d'emballage (14) ne soit effectué avec le dispositif de formage (12).

12. Procédé selon la revendication 10 ou 11, dans lequel le dispositif de coupe (20) coupe le matériau d'emballage (14) par endroits et/ou l'entaille au moins par endroits de telle sorte qu'une découpe (22) produite à partir du matériau d'emballage (14), à partir de laquelle un corps moulé tridimensionnel, en particulier un récipient de réception de denrées alimentaires, est fabriqué à l'aide du dispositif de formage (12), est reliée au matériau d'emballage (14) par au moins, en particulier plus de, deux sections de liaison (24, 26, 28), en particulier des barrettes de liaison.

13. Procédé selon l'une des revendications 10 à 12, dans lequel le matériau d'emballage (14) est entaillé au moins par endroits et une profondeur de coupe maximale d'au moins une entaille (76, 78) dépend d'une direction de fibres du matériau d'emballage (14) et/ou d'une direction de transport (80) d'une machine de production comprenant le dispositif de serre-flanc, en particulier d'une orientation par rapport à cette direction.

14. Procédé selon l'une des revendications 10 à 13, dans lequel le matériau d'emballage (14) est entaillé au moins par endroits, dans lequel au moins l'entaille (76) s'étendant en grande partie le long d'une direction de fibres du matériau d'emballage (14) et/ou le long d'une direction de transport (80) d'une machine de production comprenant le dispositif de serre-flanc et au moins l'autre entaille (78) s'étendant en grande partie le long d'une direction transversale (82) s'étendant transversalement, en particulier au moins sensiblement perpendiculairement, à la direction de fibres et/ou à la direction de transport (80) sont pratiquées dans le matériau d'emballage (14).
